(19) Europäisches Patentamt
European Patent Office
Office européen des brevets

(11) Numéro de publication: **0 120 734 B1**

# (12) FASCICULE DE BREVET EUROPEEN

(45) Date de publication du fascicule du brevet: **28.12.88**

(51) Int. Cl.⁴: **C 08 F 10/00**, C 08 F 4/62, C 08 F 2/34

(21) Numéro de dépôt: **84400341.8**

(22) Date de dépôt: **20.02.84**

## (54) Procédé pour la préparation d'un solide hydrocarboné actif utilisable pour polymériser des oléfines, et procédé de synthèse d'un polymère ou copolymère oléfinique faisant appel audit solide hydrocarboné actif comme système catalytique.

(30) Priorité: **28.02.83 FR 8303229**

(43) Date de publication de la demande: **03.10.84 Bulletin 84/40**

(45) Mention de la délivrance du brevet: **28.12.88 Bulletin 88/52**

(84) Etats contractants désignés: **AT BE DE FR GB IT NL SE**

(56) Documents cités:
**FR-A-2 430 429**
**FR-A-2 474 039**
**US-A-4 210 729**

**Le dossier contient des informations techniques présentées postérieurement au dépôt de la demande et ne figurant pas dans le présent fascicule.**

(73) Titulaire: **ATOCHEM, 4 & 8, Cours Michelet La Défense 10, F-92800 Puteaux (FR)**

(72) Inventeur: **Brun, Claude, Clos Saint-Pierre, F-64320 Idron Bizanos (FR)**
Inventeur: **Cheux, Auguste, 18 Route d'Artix, F-64310 Arthez (FR)**
Inventeur: **Pelletier, Robert, 125 Avenue Jean Mermoz, F-64140 Billere (FR)**

EP 0 120 734 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé de préparation d'un solide hydrocarboné actif convenant pour polymériser des oléfines. Elle se rapporte encore à un procédé de synthèse de polymères ou copolymères oléfines faisant appel audit solide hydrocarboné actif comme système catalytique.

On sait que l'on peut produire des polymères ou copolymères oléfiniques de hautes masses moléculaires et à faible taux de cendres en polymérisant ou copolymérisant des oléfines telles que l'éthylène et ses homologues supérieurs, notamment propène, butène-1, pentène-1, méthyl-4 pentène-1, hexène-1, octène-1, au moyen de catalyseurs supportés de type Ziegler-Natta à haute activité utilisés seuls ou en présence d'un cocatalyseur.

De tels catalyseurs sont généralement obtenus en associant un composé de métal de transition, notamment un composé de titane tel que Ti Cl4, Ti Cl3 ou un titanate d'alcoyle, avec un composé de magnésium et en particulier Mg Cl2, et éventuellement un composé organique donneur d'électrons et/ou un support poreux du type oxyde métallique. Ces catalyseurs sont engagés en polymérisation des oléfines le plus souvent en association avec des cocatalyseurs consistant en composés du type organoaluminium ou organomagnésium.

Les catalyseurs précités, qui se présentent sous la forme de poudres très fines caractérisées par un diamètre moyen des particules allant de quelques microns à quelques dizaines de microns, possèdent une activité initiale très élevée, ce qui nécessite, lors de leur utilisation directe en polymérisation des oléfines, de contrôler efficacement l'exothermicité de la polymérisation en son début.

Pour cette raison, lesdits catalyseurs sont essentiellement utilisés en pratique pour la polymérisation ou copolymérisation d'oléfines dans un milieu liquide constitué par un liquide inerte tel qu'un hydrocarbure saturé, notamment hexane ou heptane, ou encore par l'oléfine ou les oléfines à polymériser maintenues en phase liquide. En effet, dans ce cas, la polymérisation se déroulant dans un milieu liquide, on peut contrôler facilement l'exothermicité de ladite polymérisation même en son début lorsque l'activité du catalyseur est très élevée.

Par contre, l'utilisation directe des catalyseurs susmentionnés dans les procédés de polymérisation d'oléfines en phase gazeuse se heurte à de nombreuses difficultés. En effet, l'exothermicité initiale importante de la réaction de polymérisation, due à l'activité initiale élevée du catalyseur, est difficile à contrôler dans les conditions de mise en œuvre d'une polymérisation en phase gazeuse et la température du polymère en croissance autour des particules de catalyseur augmente très rapidement au-delà du point de ramollissement du polymère, avec comme conséquences d'une part un collage des grains de polymère sur les parois du réacteur et la formation d'agglomérats, ce qui conduit à des bouchages du réacteur, et d'autre part une perte d'activité du catalyseur par encapsulation. De plus, dans le cas d'une polymérisation en phase gazeuse en lit fluidisé, la fine granulométrie des particules de catalyseur conduit à une formation importante de fines qui sont entraînées hors du lit fluidisé avec les gaz et doivent être séparées de ces derniers avant leur recyclage.

On a déjà proposé, avant d'engager les catalyseurs Ziegler-Natta en polymérisation des oléfines en phase gazeuse, de modifier lesdits catalyseurs en faisant croître une enveloppe polymérique autour de chacune des particules de catalyseur, de manière à former un solide hydrocarboné actif utilisable comme catalyseur de polymérisation d'oléfines en phase gazeuse. Pour ce faire, on met en contact le catalyseur, par exemple un composé de titane, associé à un cocatalyseur approprié, notamment un alcoylaluminium, avec une quantité contrôlée d'une ou plusieurs oléfines, notamment éthylène, propène, et butène-1, au sein d'un liquide inerte, notamment hydrocarbure saturé tel que n-heptane ou hexane, puis on soumet le produit polymérique obtenu, après l'avoir séparé du milieu liquide par filtration ou décantation, à une extraction au moyen d'un solvant anhydre du type hydrocarbure saturé pour augmenter la porosité du produit polymérique actif.

De cette manière on peut former un solide catalytique polymérique, qui possède une activité initiale plus faible que celle du catalyseur Ziegler-Natta initial et se présente sous la forme de grains de granulométrie moins fine que celle du catalyseur Ziegler-Natta et de ce fait est susceptible d'être engagé en polymérisation en phase gazeuse plus aisément que le catalyseur Ziegler-Natta dont il est issu. Toutefois cette manière d'opérer est pénalisante dans la mise en œuvre industrielle d'un procédé de polymérisation d'oléfines en phase gazeuse car la préparation du solide hydrocarboné actif en milieu liquide nécessite d'effectuer des étapes additionnelles d'extraction et de séchage dudit solide hydrocarboné actif et également de manipuler et de purifier des volumes importants de liquide solvant et/ou diluant. En outre, au cours de la polymérisation en milieu liquide les fractions non cristallines du solide hydrocarboné actif se dissolvent dans le milieu liquide et de ce fait il n'est pas possible d'obtenir un solide hydrocarboné actif à caractère amorphe, qui pourrait se révéler intéressant pour produire des copolymères à caractère amorphe ou caoutchoutique.

L'invention propose un procédé pour préparer, à partir d'un catalyseur de type Ziegler-Natta supporté ou non, un solide hydrocarboné actif utilisable comme système catalytique tout particulièrement pour la polymérisation d'oléfines en phase gazeuse, ledit procédé remédiant aux inconvénients du procédé antérieur précité. En particulier dans le procédé suivant l'invention, le solide hydrocarboné actif est préparé en phase gazeuse, ce qui élimine les inconvénients liés à une préparation en milieu liquide, et en outre on utilise des mesures permettant de mieux contrôler la granulométrie et la masse volumique apparante du solide hydrocarboné actif et par là même celle du polymère final obtenu en polymérisant des oléfines au moyen du solide hydrocarboné actif comme système catalytique.

Suivant l'invention, pour préparer un solide hydrocarboné actif, utilisable pour polymériser des oléfines, on forme une masse catalytique à partir d'une composante d'un métal de transition choisi parmit Ti, V, Zr et Cr, d'un support solide poreux organique ou inorganique sous la forme d'une poudre et d'au moins un composé choisi parmi les composés organométalliques des métaux des groupes I à III du Tableau Périodique des Eléments les quantités de la composante de métal de transition et du composé ou des composés organométalliques étant telles que le rapport du nombre d'atomes du métal ou des métaux desdits groupes I à III du Tableau Périodique au nombre d'atomes de métal de transition soit compris entre 0,1 et 800, pùis on polymérise, au contact de ladite masse catalytique, une ou plusieurs oléfines en $C_2$ à $C_{12}$ de manière à produire un solide hydrocarboné actif renfermant une quantité pondérale de métal de transition comprise entre 10 et 50 000 ppm, ladite polymérisation étant réalisée en phase gazeuse à une température inférieure au point de fusion du solide hydrocarboné actif avec maintien d'une conversion horaire de l'oléfine ou des oléfines en $C_2$ à $C_{12}$ inférieure à 500 000 g par gramme de métal de transition, ladite masse catalytique étant une masse pulvérulente homogène obtenue en mèlangeant intimement la composante de métal de transition, qui se présente sous la forme de particules ayant un diamètre moyen compris entre 0,1 et 500 microns, avec le support solide poreux pulvérulent et une phase liquide renfermant le ou les composés organomètalliques des métaux des groupes I et III du Tableau Périodique des Eléments, avec ajustement de la quantité de poudre de support pour que le mélange reste sous forme homogène pulvérulente.

Dans la présente description et les revendications associées, le terme «diamètre moyen» appliqué aux diverses particules désigne la valeur du diamètre correspondant à la valeur 50% sur la courbe de répartition granulométrique pondérale cumulée des particules considérées.

De même, le terme «température de fusion» appliqué au solide hydrocarboné actif ou à tout autre polymère désigne la température au-delà de laquelle le solide hydrocarboné actif ou tout autre polymère ne peut plus être considéré comme une poudre sèche, soit qu'il y ait fusion de phase cristalline dans le cas de produits cristallins ou semicristallins ou qu'il y ait ramollissement de la phase amorphe dans le cas d'un polymère à caractère essentiellement amorphe. Au-delà de cette température, on observe des collages et des agglomérats qui empêchent de considérer les poudres comme formées de grains individualisés.

La masse pulvérulente précitée obtenue en mélangeant intimement, sous atmosphère inerte, la composante de métal de transition, le support solide poreux, et le ou les composés organométalliques de métaux des groupes I à III du Tableau Périodique des Eléments, dans tout dispositif permettant d'obtenir un mélange homogène pulvérulent des constituants, et notamment dans un réacteur à lit agité ou dans un réacteur à lit fluidisé ou encore dans un mélangeur à ruban. De préférence, la masse pulvérulente est formée en mélangeant tout d'abord la poudre de support solide poreux avec le ou les composés organométalliques, puis en incorporant la composante de métal de transition au mélange résultant.

On peut encore traiter la composante de métal de transition par un composé organométallique de métaux des groupes I à III du Tableau Périodique des Eléments, et en particulier par une partie du composé organométallique utilisé pour obtenir la masse pulvérulente, avant d'employer ladite composante de métal de transition pour la préparation de ladite masse pulvérulente.

La composante de métal de transition peut être formée d'un ou plusieurs composés des métaux de transition Ti, V, Zr et Cr. Ladite composante de métal de transition peut consister ègalement en une association d'un ou plusieurs composés desdits métaux de transition avec un composé de magnésium, et notamment MgCl2, MgO, MgCO3, ClMgOH, phosphate de magnésium, RMgCl, Mg(OR)2 et ClMgOR, R désignant un radical alcoyle en Cl à C8, ledit composé de magnésium étant éventuellement associé à AlCl3 ou au produit résultant de la mise en contact d'AlCl3 avec un donneur d'électrons. La composante de métal de transition, qu'elle soit de l'un ou l'autre des types précités, peut encore inclure un adjuvant tel qu'un composé poreux d'oxyde choisi parmi SiO2, Al2O3, TiO2, ZrO2, zéolithes, oxydes mixtes renfermant SiO2 et un ou plusieurs oxydes métalliques pris parmi ZrO2, TiO2, MgO et Al2O3, ou encore tel qu'un produit organique polymérique ou non tel que ceux renfermant du Silicium du type siloxane.

Le composé de métal de transition, qui est utilisé seul ou en association avec un composé de magnésium et éventuellement un adjuvant du type composé poreux d'oxyde ou du type siloxane pour former la composante de métal de transition, est un composé de Ti, V, Zr ou Cr choisi de préférence parmi TiCl4, TiCl3, VCl4, VOCl3, CrCl3, CrO3, acétylacétonate de vanadium, acétylacétonate de chrome, Ti(OR)p Cl(4-p) et Zr (OR)p Cl(4-p), R désignant un radical alcoyle en Cl à C8 et p étant un nombre entier allant de 1 à 4.

La composante de métal de transition présente de préférence un diamètre moyen de particules compris entre 1 et 250 microns.

Le support solide poreux inorganique ou organique sous la forme de poudre, qui entre dans la composition de la masse pulvérulente définie précédemment, peut être avantageusement un polymère ou encore un produit inorganique tel que silice, talc ou magnésie. En particulier le support solide sous la forme de poudre est un polymère oléfinique et consiste notamment en un homopolymère ou copolymère oléfinique similaire

à, ou compatible avec, celui que l'on désire produire par polymérisation d'une ou plusieurs oléfines en présence du solide hydrocarboné actif comme système catalytique. Convient tout spécialement comme support poreux solide une poudre d'un polyéthylène, d'un polypropylène, d'un copolymère d'éthylène avec moins de 20% molaire d'une ou plusieurs alpha-oléfines en C3 à C12 et notamment d'un copolymère d'éthylène avec moins de 20% molaire de butène-1 et/ou d'hexène-1.

Avantageusement, le support solide poreux sous la forme de poudre présente un diamètre moyen de particules allant de 1 à 5000 microns, et de préférence de 20 à 3000 microns.

Comme indiqué plus haut, la quantité de poudre de support dans le mélange ternaire constituant la masse pulvérulente est ajustée pour que ledit mélange reste sous une forme pulvérulente. Avantageusement ladite quantité représente 30 à 99,5%, et de préférence 50 à 99%, en poids du mélange.

Le ou les composés organométalliques des métaux des groupes I à III du Tableau Périodique des Eléments entrant dans la préparation de la masse pulvérulente définie précédemment sont des composés pour lesquels le métal est relié à au moins un radical hydrocarboné par une liaison carbone-métal. Ces composés peuvent être avantageusement des composés hydrocarbylaluminium choisis parmi l'isoprénylaluminium, les composés appelés alumoxanes et répondant à la formule générale:

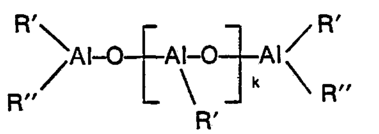

et les alcoylaluminium de formule:

Al (R')q Xr Hs

dans lesquelles X représente Cl ou un radical monovalent OR', R' désigne un radical alcoyle en Cl à Cl6, et de préférence en Cl à Cl2, tandis que q, r et s sont des nombres tels que $1 \leqslant q \leqslant 3$, $0 \leqslant r \leqslant 2$ et $0 \leqslant s \leqslant 2$ avec $q+r+s = 3$, les R'' désignent chacun un radical R' ou forment ensemble un radical bivalent –O–, et k est un entier prenant les valeurs de 0 à 18. Conviennent notamment les composés tels que Al(C2 H5)3, Al (C2 H5)2 Cl, Al (i–C4 H9)3, Al2 (C2 H5)3 Cl3, Al (i–C4 H9)2 H, Al (C2 H5) H2, Al (C2 H5)2 (0 C2 H5), et tout spécialement les composés liquides de formule Al (C6 H13)3 et Al (C8 H17)3.

On peut également choisir le ou les composés organo-métalliques parmi les composés hydrocarbylmagnésium et les composés hydrocarbylzinc, et en particulier parmi ceux desdits composés ayant les formules YMgR' ou YZnR', dans lesquelles Y représente Cl ou R' et R' désigne un radical alcoyle en Cl à Cl6 et de préférence en Cl à Cl2, ledit composé étant notamment sous forme liquide. Des exemples de tels composés sont notamment Mg (C2 H5)2, Mg (i–C4 H9)2, Cl Mg C2 H5, Mg (C6 H13)2, Mg (C8 H17)2, Zn (C2 H5)2, Zn (i–C4 H9)2, Cl Zn C2 H5, Zn (C3 H7)2.

On peut encore utiliser, à titre de composés organométalliques, des mélanges d'un ou plusieurs desdits composés hydrocarbyl magnésium avec un ou plusieurs desdits composés hydrocarbylzinc et/ou un ou plusieurs desdits composés hydrocarbylaluminium, notamment des mélanges d'un composé aloylaluminium et d'un composé alcoylmagnésium ayant les formules précitées, et en particulier les mélanges commercialisés sous le nom de MAGALA.

Dans la masse pulvérulente résultant du mélange de la composante de métal de transition, du support solide poreux, et du ou des composés organométalliques, le rapport du nombre d'atomes du ou des métaux des groupes I à III du Tableau Périodique des Eléments au nombre d'atomes de métal de transition de la composante de métal de transition, qui peut varier entre 0,1 et 800 comme indiqué précédemment, est de préférence compris entre 0,5 et 200.

La polymérisation d'une ou plusieurs oléfines en C2 à C12 au contact de la masse pulvérulente, qui conduit au solide hydrocarboné actif, est effectuée de manière à produire un solide hydrocarboné actif renfermant une quantité pondérale de métal de transition comprise entre 10 et 50 000 p.p.m., en mettant en œuvre cette polymérisation en phase gazeuse à une température inférieure au point de fusion du solide hydrocarboné actif à préparer et avec une conversion horaire spécifique desdites oléfines.

Pour cette polymérisation on peut utiliser une seule oléfine en C2 à C12, choisie par exemple parmi l'éthylène, le propène, le butène-1, l'hexène-1, le méthyl-4 pentène-1 et l'octène-1, ou encore un mélange de ces oléfines et en particulier un mélange d'éthylène et d'une ou plusieurs alpha-oléfines en C3 à C12, et notamment un mélange d'éthylène et d'une ou plusieurs alpha-oléfines telles que propène, butène-1, méthyl-4 pentène-1, et octène-1 ou un mélange de propène et d'une ou plusieurs alpha-oléfines en C4 à C12 et tout spécialement un mélange d'éthylène et de butène-1 renfermant une proportion molaire de butène-1 allant de 0,1 à 30% ou un mélange d'éthylène, de butène-1 et d'hexène-1 renfermant une proportion molaire globale de butène-1 et d'hexène-1 allant de 0,1 à 30% avec un rapport molaire hexène-1:butène-1 tel que l'hexène-1 reste à l'état de vapeurs dans les conditions de polymérisation en phase gazeuse.

De préférence ladite polymérisation est réalisée de manière à ce que le solide hydrocarboné actif produit renferme une quantité pondérale de métal de transition, issu de la composante de métal de transition, comprise entre 50 et 15 000 p.p.m.

De même pour cette polymérisation, la conversion horaire de l'oléfine ou des oléfines en C2 à C12 est de préférence maintenue entre 10 et 100 000 g par gramme de métal de transition issu de la composante de métal de transition.

La polymérisation en phase gazeuse précitée est mise en œuvre comme il est bien connu, en opérant dans tout réacteur permettant d'effectuer une réaction en phase gazeuse et notamment dans un réacteur à lit agité ou un réacteur à lit fluidisé, à une température inférieure au point de fusion Tf du solide hydrocarboné actif à produire, ladite température étant notamment comprise entre −20°C et (Tf−5)°C, et en maintenant des pressions partielles appropriées de manière à ce que l'oléfine ou les oléfines présentes dans le réacteur soient essentiellement en phase vapeur, c'est-à-dire que les condensations éventuelles desdites oléfines ne modifient pas l'aspect pulvérulent du solide hydrocarboné actif en croissance autour des particules de la masse pulvérulente résultant du mélange de la composante de métal de transition avec le support solide poreux et le ou les composés organométalliques.

La polymérisation en phase gazeuse peut être mise en œuvre en présence d'hydrogène en quantité pouvant aller jusqu'à 80%, et de préférence comprise en 1 et 70%, en volume de l'ensemble des composés gazeux présents dans le réacteur. L'utilisation d'hydrogène permet entre autres, comme il est bien connu dans l'art, d'ajuster l'indice de fusion du solide hydrocarboné actif produit.

D'autres composés, et notamment des dérivés alcoylzinc tels que zinc diéthyle ou zinc dipropyle, qui jouent un rôle d'agent de transfert de chaînes analogue à celui joué par l'hydrogène peuvent être également utilisés avec l'hydrogène ou à sa place.

La pression de polymérisation, c'est-à-dire la pression totale de la phase gazeuse contenue dans le réacteur, peut être contrôlée par addition d'un gaz inerte vis-à-vis de la réaction de polymérisation.

Pour maintenir la température de polymérisation à la valeur choisie en dessous du point de fusion du solide hydrocarboné actif en formation, on peut faire appel aux techniques habituelles permettant d'évacuer les calories excédentaires produites à l'intérieur du réacteur en phase gazeuse. On peut en particulier avoir recours à un refroidissement interne en injectant dans le réacteur soit un gaz froid, soit un gaz liquéfié qui se vaporise dans le réacteur en consommant des calories, ou encore un gaz à l'état supercritique qui apporte des frigories par détente dans le réacteur. On peut également éliminer les calories excédentaires par refroidissement externe en utilisant un réacteur muni d'une double enveloppe dans laquelle circule un fluide refrigérant. On peut avantageusement recirculer les gaz réactionnels chauds sur un échangeur de chaleur externe pour les refroidir avant de renvoyer lesdits gaz dans le réacteur.

L'oléfine ou les oléfines en C2 à C12, que l'on polymérise en phase gazeuse au contact de la masse pulvérulente définie plus haut, sont injectées dans le réacteur de polymérisation dans des conditions permettant, compte tenu des autres constituants gazeux et notamment hydrogène et/ou gaz inerte éventuellement ajoutés, de maintenir à l'intérieur du réacteur l'oléfine ou les oléfines en phase gazeuse dans les conditions de température et de pression choisies tout en produisant, avec une conversion horaire de l'oléfine ou des oléfines inférieure à 500 000 g, et de préférence comprise en 10 et 100 000 g, par gramme de métal de transition issu de la composante de métal de transition, un polymère, c'est-à-dire le solide hydrocarboné actif, renfermant une quantité pondérale de métal de transition, issue de la composante de métal de transition, comprise entre 10 et 50 000 p.p.m. et de préférence entre 50 et 15 000 p.p.m.

La préparation de la masse pulvérulente, par mélange de la composante de métal de transition avec le support solide poreux et le ou les composés organométalliques définis précédemment, ainsi que la polymérisation de l'oléfine ou des oléfines en C2 à C12 en phase gazeuse au contact de ladite masse pulvérulente peuvent être réalisées, chacune, en opérant en discontinu ou en continu.

Pour préparer la masse pulvérulente en discontinu, on introduit les ingrédients la constituant dans un dispositif mélangeur approprié, puis après un temps d'homogénéisation suffisant on recueille le mélange formé. Dans une opération continue, on amène les ingrédients constitutifs de la masse pulvérulente, en continu, à un dispositif mélangeur et on évacue le mélange résultant, en continu, dudit mélangeur, les vitesses d'introduction des ingrédients et d'évacuation du mélange étant choisies pour obtenir un temps de séjour suffisant des ingrédients dans le mélangeur conduisant à une homogénéité satisfaisante. Dans l'opération en discontinu comme dans l'opération en continu, on effectue de préférence, comme indiqué précédemment, le mélange du support poreux solide avec le ou les composés organométalliques, puis on incorpore la composante de métal de transition au mélange résultant pour aboutir à la masse pulvérulente.

Pour mettre en œuvre la polymérisation en phase gazeuse en discontinu de l'oléfine ou des oléfines en C2 à C12 au contact de la masse pulvérulente, on peut par exemple opérer comme suit. Dans le réacteur, maintenu à la température appropriée et renfermant ladite masse pulvérulente et éventuellement une phase gazeuse consistant en un gaz inerte vis-à-vis de la polymérisation et/ou en hydrogène, on introduit une quantité contrôlée de l'oléfine ou des oléfines à polymériser pour obtenir un solide hydrocarboné actif renfermant une quantité pondérale de métal de transition, issu de la composante de métal de transition, comprise entre 10 et 50 000 p.p.m, et de préférence entre 50 et 15 000 p.p.m., en réalisant cette introduction de manière à maintenir l'oléfine ou les oléfines en phase gazeuse à l'intérieur du réacteur et la température à la valeur choisie et en outre à assurer une conversion horaire de l'oléfine ou des oléfines dans les limites définies plus haut. On peut notamment introduire la quantité contrôlée précitée de l'oléfine ou des oléfines

dans le réacteur en régulant le débit d'amenée de l'oléfine ou des oléfines au réacteur de manière à remplir les trois conditions ci-dessus. En outre lorsque l'on polymérise en phase gazeuse au contact de la masse pluvérulente un mélange d'au moins deux monooléfines en C2 ou C12, et en particulier un mélange d'éthylène et d'une ou plusieurs alpha-oléfines en C3 à C12, comme par exemple un mélange d'éthylène et de butène-1 ou un mélange d'éthylène, de butène-1 et d'hexène-1, on contrôle le rapport des oléfines injectées dans le réacteur de manière à maintenir constante la composition du milieu réactionnel gazeux au contact de la masse pulvérulente.

Pour mettre en œuvre en continu la polymérisation en phase gazeuse de l'oléfine ou des oléfines en C2 à C12 au contact de la masse pulvérulente on peut par exemple opérer comme suit.

Dans un réacteur agité, on introduit une charge de poudre de polymère, puis après purification par plusieurs purges à l'azote, on établit un mélange réactionnel gazeux par addition de l'oléfine ou des oléfines en C2 à C12, et éventuellement d'hydrogène et/ou d'un gaz inerte, jusqu'à atteindre la valeur souhaitée des pressions partielles de celles-ci. On introduit alors un débit semi-continu de ladite masse pulvérulente, avantageusement par un sas balayé à l'azote, et un débit horaire de l'oléfine ou des oléfines proportionnel au débit de masse pulvérulente. On extrait de manière semi-continue le solide hydrocarboné actif de réacteur, avantageusement par l'intermédiaire d'un sas, pour maintenir constante la masse totale de solide à l'intérieur du réacteur. La température du réacteur est maintenue constante en faisant appel à des moyens de refroidissement du réacteur, tandis que la pression totale dans le réacteur est maintenue constante par ajout d'azote ou purge de gaz à l'atmosphère, suivant le cas. La pression partielle d'hydrogène, mesurée par un chromatographe en phase gazeuse est ajustée par action sur le débit d'entrée d'hydrogène.

Un donneur d'électrons consistant en une base de Lewis peut être incorporé au solide hydrocarboné actif en quantité telle que le rapport du nombre d'atomes de métal des groupes I à III du Tableau Périodique qu'il renferme au nombre de molécules de donneur d'électrons soit compris entre 0,1 et 50 et de préférence entre 1 et 20. Le donneur d'électrons peut être incorporé au solide hydrocarboné actif directement par mélangeage avec ce dernier. On peut encore incorporer le donneur d'électrons audit solide hydrocarboné actif en un point quelconque du processus d'obtention de ce dernier, et notamment au cours de la préparation de la masse pulvérente ou encore lors de la polymérisation en phase gazeuse de l'oléfine ou des oléfines en C2 à C12 au contact de ladite masse pulvérente. Le donneur d'électrons peut être introduit, dilué ou non dans un liquide inerte et notamment dans un hydrocarbure saturé, seul ou en association avec les oléfines et/ou les composés organométalliques.

Le donneur d'électrons peut être avantageusement choisi parmi les esters alcoyliques d'acides carboxyliques aliphatiques ou aromatiques, les éthers aliphatiques ou cycliques, les cétones, les esters vinyliques, les dérivés acryliques et en particulier les acrylates ou méthacrylates d'alcoyle. Conviennent notamment comme donneurs d'électrons les composés tels que formiate de méthyle, paratoluate de méthyle, benzoate d'éthyle, acétate d'éthyle ou de butyle, éther éthylique, tétrahydrofuranne, dioxane, acétone, méthylisobutylcétone, acétate de vinyle et méthacrylate de méthyle.

Le solide hydrocarboné actif obtenu par le procédé qui vient d'être décrit, peut se substituer aux systèmes catalytiques Ziegler-Natta formés à partir d'une composante d'un métal de transition associée à au moins un composé organométallique d'un métal des groupes I à III du Tableau Périodique des Eléments, et notamment à un composé hydrocarbylaluminium et/ou hydrocarbylmagnésium, et éventuellement à un donneur d'électrons, par exemple du type de ceux définis plus haut, pour catalyser la polymérisation des oléfines en polymères ou copolymères oléfiniques.

Dans le cadre de l'invention, les oléfines susceptibles d'être polymérisées ou copolymérisées au moyen du solide hydrocarboné actif incluent non seulement les hydrocarbures en C2 à C18 présentant une insaturation éthylénique unique, et en particulier les monooléfines telles qu'éthlène, propène, butène-1, pentène-1, hexène-1, méthyl-4 pentène-1, octène-1, décène-1, dodécène-1, tridécène-1, hexadécène-1, octadécène-1, mais encore les diènes conjugués ou non conjugués, notamment butadiène, isoprène, hexadiène-1, 4, hexadiène-1, 5, vinylnorbornène, éthylidénenorbornène.

Le solide hydrocarboné actif suivant l'invention est tout particulièrement utilisable comme système catalytique pour la polymérisation des monooléfines en C2 à C12.

On peut notamment polymériser une monooléfine unique en C2 à C12, par exemple éthylène, propène ou butène-1, au contact du solide hydrocarboné actif en vue de produire l'homopolymère correspondant à cette monooléfine.

On peut encore polymériser des mélanges d'au moins deux oléfines en C2 à C12 au contact dudit solide hydrocarboné actif, en vue de produire des copolymères desdites oléfines. On peut notamment polymériser des mélanges d'éthylène et d'une ou plusieurs alpha-oléfines en C3 à C12, lesdits mélanges, lorsqu'ils sont au contact du solide hydrocarboné actif, renfermant une proportion molaire globale d'alpha-oléfines en C3 à C12 comprise entre 0,1 et 75% et de préférence entre 1 et 50%.

On peut également polymériser des mélanges de propène avec l'éthylène et/ou une ou plusieurs alpha-oléfines en C4 à C12, lesdits mélanges, lorsqu'ils sont au contact du solide hydrocarboné actif, renfermant une proportion molaire globale d'éthylène et/ou d'alpha-oléfines en C4 à C12

comprise entre 0,1 et 75% et de préférence entre 1 et 50%.

On peut encore polymériser des mélanges d'éthylène et de propène, avec ou sans autres alpha-oléfines ou dioléfines, tels que le rapport molaire éthylène:propène soit compris entre 0,02 et 50 et de préférence entre 0,05 et 1.

La polymérisation des oléfines précitées, et en particulier des monooléfines en C2 à C12 prises seules ou en mélanges, comme indiqué plus haut, au moyen du solide hydrocarboné actif peut être mise en œuvre en solution ou en suspension dans un milieu liquide inerte, et notamment dans un hydrocarbure aliphatique tel que n-heptane, n-hexane ou isobutane, ou dans l'une au moins des oléfines à polymériser, telle que propène ou butène-1, maintenue à l'état liquide. Les conditions opératoires à utiliser pour mettre en œuvre ces poylmérisations en milieu liquide sont celles qui sont habituellement proposées pour des cas similaires utilisant un système catalytique conventionnel de type Ziegler-Natta supporté ou non.

Le solide hydrocarboné actif suivant l'invention présente cependant un intérêt tout particulier pour la polymérisation en phase gazeuse des oléfines ou de leurs mélanges, qui viennent d'être cités. En particulier, on peut polymériser en phase gazeuse, au contact dudit solide hydrocarboné actif, un mélange d'éthylène et d'une ou plusieurs alpha-oléfines en C3 à C12, telles que propène, butène-1, méthyl 4 pentène-1, hexène-1 et octène-1, renfermant, lorsqu'il est au contact du solide hydrocarboné actif, une proportion molaire d'alpha-oléfines en C3 à C12 comprise entre 0,1 et 50% et de préférence entre 1 et 40%, en vue de produire un copolymère éthylène/alpha-oléfine à teneur molaire minoritaire en alpha-oléfine en C3 à C12, connu sous le nom de polyéthylène linéaire basse densité.

La polymérisation en phase gazeuse de l'oléfine ou des oléfines au contact du solide hydrocarboné actif peut être effectuée dans tout réacteur permettant une polymérisation en phase gazeuse et en particulier dans un réacteur à lit agité ou de préférence dans un réacteur à lit fluidisé.

Les conditions de mise en œuvre de la polymérisation en phase gazeuse, notamment température, pression, injection de l'oléfine ou des oléfines dans le réacteur à lit agité ou à lit fluidisé, contrôle de la température et de la pression de polymérisation, sont analogues à celles proposées dans l'art antérieur pour la polymérisation en phase gazeuse des oléfines.

On opère généralement à une température inférieure au point de fusion Tf du polymère ou copolymère à synthétiser, et plus particulièrement comprise entre $-20\,°C$ et $(Tf -5)\,°C$, et sous une pression telles que l'oléfine ou les oléfines, et éventuellement les autres monomères hydrocarbonés, présents dans le réacteur soient essentiellement en phase vapeur. Les conditions particulières de pression et température à choisir dépendent de la nature de l'oléfine ou des oléfines à polymériser.

La polymérisation en phase gazeuse peut être réalisée en présence d'un agent de transfert de chaînes, notamment hydrogène ou encore alcoylzinc tel que zinc diéthyle, de manière à contrôler l'indice de fusion du polymère ou copolymère à synthétiser. L'agent de transfert de chaînes préféré est l'hydrogène, que l'on utilise en quantité pouvant aller jusqu'à 80%, et se situant de préférence entre 1 et 70%, du volume de l'ensemble des composés gazeux présents dans le réacteur.

La phase gazeuse contenue dans le réacteur peut également comprendre un ou plusieurs gaz inertes vis-à-vis de la réaction de polymérisation, notamment azote, argon, hydrocarbures gazeux saturés, ce qui peut permettre de contrôler les pressions partielles à l'intérieur du réacteur.

La température de polymérisation peut être contrôlée soit par refroidissement interne ou par refroidissement externe, comme indiqué pour la mise en œuvre de la polymérisation en phase gazeuse produisant le solide hydrocarboné actif.

Les modes d'injection de l'oléfine ou des oléfines à polymériser dans le réacteur dépendent de la forme sous laquelle ces olèfines sont disponibles dans les conditions de pression et de température de stockage.

Dans une polymérisation en phase gazeuse réalisée en discontinu on peut introduire l'oléfine ou les oléfines dans le réacteur de telle sorte que la pression à l'intérieur du réacteur reste sensiblement constante, et, en outre, dans le cas d'une copolymérisation on peut contrôler le rapport des oléfines injectées dans le réacteur.

Dans une polymérisation en phase gazeuse mise en œuvre en continu, le mode opératoire peut être le suivant.

Dans un réacteur agité, par exemple par fluidisation, on introduit une charge initiale de polymère, puis, après purification par de nombreuses purges à l'azote, on établit un mélange gazeux réactionnel par introduction de l'oléfine ou des oléfines, et plus généralement du ou des monomères à polymériser, et éventuellement d'hydrogène et/ou d'un gaz inerte pour atteindre les pressions partielles souhaitées. On introduit alors dans le réacteur un débit donné du solide hydrocarboné actif, par exemple de manière semi-continue par l'intermédiaire d'un sas balayé à l'azote. Dès le début de l'injection du solide hydrocarboné actif dans le réacteur, on observe une tendance à l'échauffement indiquant le début de la polymérisation. On maintient alors le réacteur à température constante en faisant appel à des moyens de refroidissement tels que ceux envisagés précédemment. La pression du réacteur peut être régulée par action sur le débit de l'oléfine principale injectée dans le réacteur. Les pressions partielles, contrôlées par exemple par chromatographie en phase gazeuse, sont régulées en agissant sur les débits des oléfines, de l'hydrogène et du gaz inerte. La masse totale de poudre dans le réacteur peut être maintenue constante en agissant sur le débit de poudre sortant du réacteur, par exemple en agissant sur la fréquence d'ouverture d'un système d'extraction par sas. En outre, l'activité du solide hydrocarboné actif pouvant varier, on peut ajuster la production horaire du réacteur en jouant sur le débit d'entrée dudit solide hydrocarboné actif.

Quel que soit le mode de polymérisation, une quantité supplémentaire d'un ou plusieurs composés organométalliques de métaux des groupes I à III du Tableau Périodique des Eléments, et notamment d'un composé hydrocarbylaluminium et/ou hydrocarbylmagnésium, similaire ou non à celui utilisé pour la préparation du solide hydrocarboné actif, peut être ajoutée, si besoin est, au milieu de polymérisation de l'oléfine ou des oléfines en présence du solide hydrocarboné actif pour ajuster, dans le milieu réactionnel, la concentration en atomes de métal des groupes I à III du Tableau Périodique des Eléments, notamment aluminium et/ou magnésium, et/ou le rapport du nombre de ces atomes au nombre d'atomes de métal de transition, issu de la composante de métal de transition, aux valeurs choisies pour la polymérisation.

Lorsque le solide hydrocarboné actif ne renferme pas de donneur d'électrons, on peut ajouter ce dernier au milieu de polymérisation de l'oléfine ou des oléfines en présence du solide hydrocarbone actif. Au cas où l'on ajoute une quantité supplémentaire d'un ou plusieurs composés organométalliques au milieu de polymérisation comme indiqué plus haut, le donneur d'électrons peut être ajouté au milieu de polymérisation en mélange avec ladite quantité supplémentaire du ou des composés organométalliques.

On peut encore ajouter ladite quantité supplémentaire du ou des composés organométalliques précités ou/et le donneur d'électrons au solide hydrocarboné actif après la préparation de ce dernier, mais avant de l'engager en polymérisation de l'oléfine ou des oléfines. Dans le cas d'une polymérisation en phase gazeuse, cette dernière mise en œuvre est particulièrement avantageuse. Il n'y a en effet qu'une seule composante catalytique à injecter dans le réacteur, ce qui facilite le contrôle de la réaction et simplifie les moyens d'introduction. De plus, ladite mise en œuvre évite les problèmes d'agglomération qui peuvent résulter de l'injection de composés liquides dans une réaction de type gaz/solide. En outre, le composé organométallique ainsi ajouté au solide hydrocarboné actif ne présente, le plus souvent, aucun caractère pyrophorique.

L'invention est illustrée par les exemples suivants donnés à titre non limitatif.

EXEMPLE 1:

a) Préparation du solide hydrocarboné actif:

Dans un ballon de 1 litre séché, maintenu sous atmosphère d'azote, on introduisait 186 g d'un support solide poreux consistant en une poudre de polyéthylène basse densité présentant une granulométrie comprise entre 100 et 160 microns et un diamètre moyen de particules égal à 135 microns, ainsi que 12,26 g de tri n-hexylaluminium pur se présentant sous la forme d'un liquide, et l'ensemble était homogénéisé sous atmosphère d'azote.

Au produit obtenu, on ajoutait alors, toujours sous atmosphère d'azote, 12,19 g d'une composante renfermamt TiCl4 résultant du cobroyage de TiCl4 avec MgCl2 et le produit de réaction d'AlCl3, d'anisole et de benzoate d'éthyle, préparé en suivant scrupuleusement le mode opératoire de l'exemple 1. de la demande de brevet français no 81 088 440 – publication no 2 481 705 – page 19, ladite composante contenant, en poids, 1,8% de titane et 14% de magnésium et se présentant sous la forme de particules d'un diamètre moyen de 70 microns et d'aire spécifique d'environ 0,6 $m^2/g$.

Le mélange résultant était alors homogénéisé sous azote pour donner une masse pulvérulente dans laquelle le rapport du nombre d'atomes d'aluminium issu du tri-n-hexalaluminium au nombre d'atomes de titane était égal à 9,70.

La masse pulvérulente obtenue était introduite dans un réacteur muni d'un agitateur tournant à la vitesse de 400 tours/minute, ledit réacteur étant maintenu sous azote et chauffé à 70 °C.

Dans le réacteur on injectait alors de l'azote et de l'hydrogène jusqu'à atteindre des pressions partielles égales à 4,5 bars pour l'azote et 0,5 bar pour l'hydrogène. On admettait ensuite dans ledit réacteur, pendant 30 minutes, un mélange d'éthylène et de butène-1 dans un rapport molaire butène-1:éthylène égal à 0,0466 et avec un débit tel que le débit d'éthylène représentait 100 l/heure, puis, pendant 3,5 heures, ce même mélange avec un débit d'éthylène égal à 200 l/heure.

Après 1,5 heure de polymérisation on introduisait dans le réacteur, à l'aide d'une pompe doseuse, 30 ml de tri-n-hexylaluminium pur à raison de 0,5 ml/minute.

Au bout de 4 heures de réaction, on récupérait, sous atmosphère inerte, 1257 g d'un solide hydrocarboné actif en poudre, qui était stocké en boîte à gant sous atmosphère inerte d'azote.

Ce solide hydrocarboné actif polymérique présentait les caractéristiques suivantes:

| | |
|---|---|
| – Teneur en Ti: | 174 p.p.m. poids |
| – Teneur en Al: | 1766 p.p.m. poids |
| – Densité: | 0,926 |
| – Diamètre moyen des particules: | 280 microns |
| – Masse volumique apparente (produit tassé): | 0,451 $g/cm^3$ |
| – Indice de fusion ($MI_{190\,°C}^{2,16}$): | 8,8 |

b) Polymérisation d'éthylène en phase gazeuse au contact du solide hydrocarboné actif en polyéthylène de haute densité:

On opérait dans un réacteur muni d'un agitateur tournant avec une vitesse de rotation de 400 tours/minute, ledit réacteur étant chauffé à la température de 85 °C.

Dans le réacteur agité, on injectait de l'hydrogène et de l'éthylène jusqu'à obtenir des pressions d'hydrogène et d'éthylène égales respectivement à 4 bars et 13 bars. On introduisait ensuite dans ledit réacteur 20 g du solide hydrocarboné actif préparé comme décrit dans la première partie de cet exemple et sur lequel, préalablement à son introduction dans le réacteur, on avait déposé 2,5 ml d'une solution d'acétate de vinyle à 6,4 g/l dans l'heptane. L'introduction du solide hydrocarboné actif dans le réacteur était effectuée par poussée à l'azote, l'injection d'azote étant poursuivie jusqu'à ce que la pression à l'intérieur du réacteur eût atteint une valeur égale à 21 bars. On ajoutait alors, à la pompe doseuse, 5 ml d'une solution à 400 g/l de tri-n-hexylaluminium dans l'heptane, et l'on maintenait la pression dans le réacteur à la valeur de 21 bars par injection d'éthylène.

Après 4 heures de réaction, on recueillait 800 g de polyéthylène pulvérulent de haute densité présentant les caractéristiques suivantes:

| | |
|---|---|
| – Teneur en Ti: | 4,35 p.p.m. poids |
| – Teneur en Al: | 306 p.p.m. poids |
| – Densité: | 0,952 |
| – Diamètre moyen des particules: | 1200 microns |
| – Masse volumique apparente (produit tassé): | 0,410 g/cm$^3$ |
| – Indice de fusion ($MI^{2,16}_{190\,°C}$): | 0,5 |

c) Polymérisation du propène en phase gazeuse au contact du solide hydrocarboné actif:

On opérait dans un réacteur muni d'un agitateur tournant avec une vitesse de rotation égale à 460 tours/minute, ledit réacteur étant maintenu à la température de 83 °C pendant toute la durée de la polymérisation.

Dans ledit réacteur agité, on introduisait, sous balayage de propène, 6,7 ml de triisobutyl aluminium en solution à 375 g/l dans l'heptane, 5 ml de méthylparatoluate en solution à 115 g/l dans l'heptane, et 24 g du solide hydrocarboné actif obtenu dans la première partie de l'exemple 1, puis on continuait l'injection du propène jusqu'à obtenir une pression de 9 bars dans le réacteur. Dans le mélange réactionnel ainsi formé dans le réacteur les rapports molaires théoriques Al:Ti et Al:méthylparatoluate étaient respectivement égaux à 174 et 3,96. La pression dans le réacteur était ensuite maintenue à la valeur de 9 bars par injection contrôlée de propène pendant une durée de 3 heures.

Au bout de cette période on arrêtait l'injection de propène et évacuait la phase gazeuse sous refroidissement, arrêtant ainsi la polymérisation.

On recueillait 320 g de poudre de polypropylène présentant les caractéristiques suivantes:

| | |
|---|---|
| – Teneur en Ti: | 13 p.p.m. poids |
| – Teneur en Al: | 1280 p.p.m. poids |
| – Masse volumique apparente (produit tassé): | 0,461 g/cm$^3$ |
| – Indice de fusion ($MI^{2,16}_{230\,°C}$): | 12 |
| – Productivité (g par g de la composante renfermant TiCl4): | 1384 |

EXEMPLE 2:

a) Préparation du solide hydrocarboné actif:

Dans un ballon de 1 litre sec, maintenu sous atmosphère d'azote, on introduisait 160 g d'un support consistant en une poudre de polyéthylène basse densité présentant une granulométrie comprise entre 100 et 160 microns et un diamètre moyen des particules égal à 135 microns, ainsi que 11,6 g de tri n-octylaluminium pur se présentant sous la forme d'un liquide, et l'ensemble était homogénéisé sous atmosphère d'azote.

Au produit obtenu, on ajoutait alors, toujours sous azote, 8,65 g d'une composante renfermant TiCl4 résultant du cobroyage de TiCl4 avec Mg Cl2 et le produit de réaction d'AlC13, d'anisole et de benzoate d'éthyle, ladite composante renfermant, en poids, 1,8% de titane et 14% de magnésium et se présentant sous la forme de particules d'un diamètre moyen de 70 microns et d'aire spécifique d'environ 0,6 m$^2$/g.

Le mélange résultant était alors homogénéisé sous azote pour donner une masse pulvérulente, dans laquelle le rapport du nombre d'atomes d'aluminium issu du tri n-octylaluminium au nombre d'atomes de titane était égal à 9,90.

La masse pulvérulente obtenue était introduite dans un réacteur muni d'un agitateur tournant à la vitesse de 400 tours/minute, ledit réacteur étant maintenu sous azote et chauffé à 70 °C.

Dans le réacteur, on injectait alors de l'azote et de l'hydrogène jusqu'à atteindre des pressions partielles égales à 5 bars pour l'azote et 0,5 bar pour l'hydrogène. On admettait ensuite dans ledit réacteur, pendant 30 minutes, un mélange d'éthylène et de butène-1 dans un rapport molaire butène-1:éthylène égal à 0,0466 et avec un débit tel que le débit d'éthylène représentait 100 l/heure, puis, pendant 3,5 heures, ce même mélange avec un débit d'éthylène égal à 200 l/heure.

Après 2,5 heures de polymérisation, on introduisait dans le réacteur, à l'aide d'une pompe doseuse, 44 g de tri n-octylaluminium pur, cette addition étant effectuée en 1 heure.

Après 4 heures de réaction, on récupérait sous atmosphère inerte 1210 g d'un solide hydrocarboné actif en poudre qui était stocké en boîte à gant.

Ce solide hydrocarboné actif présentait les caractéristiques suivantes:

| | |
|---|---|
| – Teneur en Ti: | 128 p.p.m. poids |
| – Teneur en Al: | 3446 p.p.m. poids |
| – Densité: | 0,9245 |
| – Diamètre moyen des particules: | 390 microns |
| – Masse volumique apparente (produit tassé): | 0,400 g/cm$^3$ |

- Indice de fusion ($MI_{190\,°C}^{2,16}$): 4,35

b) Polymérisation d'un mélange d'éthylène et de propène en phase gazeuse au contact du solide hydrocarboné actif en un copolymère statistique amorphe:

On opérait dans un réacteur muni d'un agitateur tournant avec une vitesse de rotation de 360 tours/minute, ledit réacteur étant chauffé à la température de 75 °C.

Dans ledit réacteur préalablement séché et maintenu sous balayage d'azote (pression partielle de l'azote égale à 1 bar), on introduisait 21 g du solide hydrocarboné actif préparé comme indiqué au début de l'exemple 2. On injectait alors de l'éthylène et du propène dans le réacteur avec des débits égaux à 100 l/heure pour l'éthylène et 125 g/heure pour le propène.

Après trois heures de réaction la pression totale à l'intérieur du réacteur était égale à 11 bars.

Le réacteur était alors refroidi et évacué et l'on recueillait ensuite 580 g d'un copolymère statistique éthylène/propène à caractère amorphe. Ce copolymère renfermait 65% en poids d'éthylène et se présentait sous la forme d'une poudre ayant un diamètre moyen des particules d'environ 1000 microns.

La poudre de copolymère ne renfermait pas d'agglomérat et l'intérieur du réacteur était parfaitement propre.

EXEMPLE 3:

a) Réglage de la taille des particules du solide hydrocarboné actif:

On effectuait trois essais, à savoir 3.a.1, 3.a.2 et 3.a.3, de préparation d'un solide hydrocarboné actif en suivant le mode opératoire de préparation du solide hydrocarboné actif décrit dans la partie a de l'exemple 1, en utilisant toutefois pour former la masse pulvérulente des quantités différentes de la composante renfermant TiCl4 et de tri n-hexylaluminium (en abrégé THA) et en faisant varier la nature, la quantité et la granulométrie du support solide poreux comme indiqué ci-après, et en n'ajoutant pas de THA au milieu réactionnel durant la polymérisation, les autres conditions opératoires restant identiques à celles données dans l'exemple 1.

Conditions spécifiques aux essais

Essai 3.a.1:

- Composant renfermant TiCl4 : 9,4 g
- THA pur : 8 g
- Support solide poreux : 100 g d'un polyéthylène linéaire basse densité ayant une granulométrie inférieure à 500 microns et un diamètre moyen de particules égal à 300 microns
- Rapport molaire Al/Ti : 7,98 g

Essai 3.a.2:

- Composant renfermant TiCl4 : 12,4 g
- THA pur : 15 g
- Rapport molaire Al/Ti : 11,32 g
- Support solide poreux : 100 g d'un polyéthylène basse densité, obtenu par un procédé haute pression, ayant une granulométrie inférieure à 250 microns et un diamètre moyen de particules égal à 140 microns.

Essai 3.a.3:

- Composante renfermant TiCl4 : 9,2 g
- THA pur : 10,8 g
- Rapport molaire Al/Ti : 10,99 g
- Support solide poreux : 86 g d'un polyéthylène basse densité, obtenu par un procédé haute pression, ayant une granulométrie inférieure à 100 microns et un diamètre moyen de particules égal à 70 microns.

Les solides hydrocarbonés actifs obtenus dans les divers essais présentaient les caractéristiques ci-après:

| N° de l'essai | 3.a.1 | 3.a.2 | 3.a.3 |
|---|---|---|---|
| · Poids du solide hydrocarboné actif (g) | 1.100 | 1.100 | 975 |
| · Teneur en Ti (p.p.m. poids) | 153 | 203 | 170 |
| · Teneur en Al (p.p.m. poids) | 690 | 1.295 | 1.052 |
| · Densité | 0,9215 | 0,9218 | 0,9215 |
| · Diamètre moyen des particules (microns) | 600 | 330 | 260 |
| · Masse volumique apparente du produit tassé ($g/cm^3$) | 0,346 | 0,410 | 0,383 |
| · Indice de fusion ($MI_{190\,°C}^{2,16}$) | 0,09 | 1,2 | 4,52 |

Au vu de ces résultats, il apparaît que le choix de la granulométrie, et notamment du diamètre moyen des particules, du support poreux solide utilisé pour former la masse pulvérulente à partir de laquelle on produit le solide hydrocarboné actif permet de régler la taille des particules, et notamment le diamètre moyen des particules, dudit solide hydrocarboné actif, cette taille allant croissant, les autres conditions étant sensiblement égales par ailleurs, avec la taille, et notamment avec le diamètre moyen, des particules dudit support.

b) Polymérisation d'un mélange d'éthylène et de butène-1 en phase gazeuse au contact des solides hydrocarbonés actifs en copolymères éthylène/butène-1 ou polyéthylènes linéaires basse densité:

On effectuait trois essais, à savoir 3.b.1, 3.b.2 et 3.b.3, de polymérisation en phase gazeuse d'un mélange d'éthylène et de butène-1 en utilisant comme systèmes catalytiques les solides hydrocarbonés actifs obtenus comme décrit dans la partie a de cet exemple.

On opérait dans un réacteur muni d'un agitateur tournant avec une vitesse de rotation de 400 tours/minute, ledit réacteur étant maintenu à la température de 85 °C.

Dans le réacteur séché et maintenu sous vide on injectait du butène-1 jusqu'à obtenir une pression de butène-1 égale à 1 bar. On introduisait alors dans le réacteur du THA en quantité variant suivant les essais et correspondant à 4,70 ml d'une solution à 300 g/l de THA dans l'heptane dans l'essai 3.b.1, à 1,85 ml de THA pur dans l'essai 3.b.2 et à 4,5 ml de THA pur dans l'essai 3.b.3. On injectait ensuite successivement dans le réacteur du butène-1, de l'hydrogène et de l'éthylène jusqu'à obtenir des pressions partielles de butène-1, d'hydrogène et d'éthylène égales respectivements à 2 bars, 1,5 bar et 13,5 bars. On introduisait alors dans ledit réacteur une certaine quantité du solide hydrocarboné actif préparé dans la partie a de cet exemple. L'introduction du solide hydrocarboné actif dans le réacteur était effectuée par poussée à l'azote, l'injection d'azote étant poursuivie jusqu'à ce que la pression totale à l'intérieur du réacteur eût atteint une valeur égale à 21 bars. On maintenait ensuite la pression dans le réacteur à cette valeur par injection d'un mélange d'éthylène et de butène-1 dans un rapport molaire butène-1:éthylène égal à 0,0466.

Après 4 heures de réaction, la polymérisation était arrêtée par décompression du réacteur, purge sous azote et refroidissement dudit réacteur, et l'on recueillait le copolymère éthylène/butène-1 formé, ledit copolymère étant dénommé dans l'art polyéthylène linéaire basse densité (en abrégé LLDPE).

Les conditions opératoires spécifiques à chaque essai et les résultats obtenus sont donnés ci-après.

| Essai N° | 3.b.1 | 3.b.2 | 3.b.3 |
|---|---|---|---|
| · Solide hydrocarboné actif | | | |
| – origine | 3.a.1 | 3.a.2 | 3.a.3 |
| – quantité (g) | 13 | 17 | 17,7 |
| – diamètre moyen des particules (microns) | 600 | 330 | 260 |
| · Poids de LLDPE obtenu (g) | 1.100 | 1.840 | 1.300 |

| Essai N° | 3.b.1 | 3.b.2 | 3.b.3 |
|---|---|---|---|
| · Caractéristiques du LLDPE | | | |
| – Teneur en Ti (p.p.m. poids) | 1,80 | 1,87 | 2,31 |
| – Teneur en Al (p.p.m. poids) | 130 | 41 | 277 |
| – Densité | 0,9225 | 0,9235 | 0,9220 |
| – Diamètre moyen des particules (microns) | 1.600 | 1.250 | 1.100 |
| – Masse volumique apparente du produit tassé ($g/cm^3$) | 0,346 | 0,410 | 0,340 |
| – Indice de fusion ($M_{190\,°C}^{2,16}$) | 0,63 | 0,86 | 0,58 |

Toutes conditions sensiblement égales par ailleurs, le diamètre moyen des particules du copolymère (LLDPE) obtenu va croissant avec le diamètre moyen des particules du solide hydrocarboné actif utilisé comme système catalytique, ce dernier diamètre moyen allant également croissant avec le diamètre moyen des particules du support solide poreux utilisé dans la préparation du solide hydrocarboné actif. On peut donc régler le diamètre moyen des particules du polymère à produire en contrôlant le diamètre moyen des particules dudit support solide poreux.

EXEMPLE 4:

a) Préparation du solide hydrocarboné actif en utilisant une composante de métal de transition de fine granulométrie:

Dans un ballon de 1 litre séché et maintenu sous atmosphère d'azote, on introduisait 200 g d'un support solide poreux consistant en une poudre de polyéthylène basse densité présentant une granulométrie comprise entre 100 et 160 microns ainsi qu'un diamètre moyen de particules d'environ 140 microns, et 10,7 g de THA pur se présentant sous la forme d'un liquide, et l'ensemble était homogénéisé sous atmosphère d'azote.

Au produit obtenu, on ajoutait alors, sous atmosphère d'azote, 8,3 g d'une composante à base de TiCl4 résultant de la combinaison de TiCl4 et Mg Cl2 en présence de benzoate d'éthyle dans l'heptane, ladite composante renfermant, en poids, 1,7% de titane, 7% de benzoate d'éthyle, et 10% d'heptane, et se présentant sous la forme de particules ayant un diamètre moyen d'environ 10 microns.

Le mélange résultant était alors homogénéisé sous azote pour donner une masse pulvérulente dans laquelle le rapport du nombre d'atomes d'aluminium issu du THA au nombre d'atomes de titane était égale à 12,1.

La masse pulvérulente obtenue était transférée dans un réacteur muni d'un agitateur tournant à la vitesse de 400 tours/minute, ledit réacteur étant maintenu à une température de 70 °C sous une pression d'azote de 1 bar.

Cette opération terminée, on injectait à nouveau de l'azote dans le réacteur puis de l'hydrogène jusqu'à atteindre des pressions partielles égales à 5,5 bars pour l'azote et 0,5 bar pour l'hydrogène.

On admettait ensuite dans ledit réacteur, toujours maintenu à 70 °C, de l'éthylène et du butène-1, pendant 30 minutes, avec des débits tels que le rapport molaire butène-1:éthylène, à l'entrée du réacteur, fût égal à 0,0466 et le débit d'éthylène représentait 100 l/heure, puis on continuait l'injection d'éthylène et de butène-1 pendant 3,5 heures avec un débit d'éthylène égal à 200 l/heure et un rapport molaire butène-1:éthylène égal à 0,0466.

Au bout d'une durée de 2,5 heures après le début d'injection des oléfines, on introduisait dans le réacteur, à l'aide d'une pompe doseuse, 22 ml de THA, cette injection étant réalisée en 30 minutes.

Après une durée d'injection des oléfines égale à 4 heures, on arrêtait la polymérisation par décompression du réacteur, puis purge sous azote et refroidissement dudit réacteur.

On récupérait 1280 g d'un solide hydrocarboné actif en poudre, que l'on stockait en boîte à gant sous atmosphère inerte.

Ce solide hydrocarboné actif polymère présentait les caractéristiques suivantes:

| | |
|---|---|
| – Teneur en Ti (p.p.m. poids): | 116 |
| – Teneur en Al (p.p.m. poids): | 2100 |
| – Densité: | 0,922 |
| – Diamètre moyen des particules (microns) | 170 |
| – Masse volumique apparente du produit tassé ($g/cm^3$): | 0,454 |
| – Indice de fusion ($MI_{190\,°C}^{2,16}$): | 4,2 |

b) Polymérisation d'un mélange d'éthylène et de butène-1 en phase gazeuse au contact du solide hydrocarboné actif pour former un copolymère éthylène/butène-1 (LLDPE):

On opérait dans un réacteur muni d'un agitateur, tournant avec une vitesse de rotation de 400 tours/minute, et maintenu à la température de 85 °C pendant toute la polymérisation.

Dans le réacteur séché et maintenu sous vide on injectait tout d'abord du butène-1 jusqu'à obtenir une pression de 1 bar, puis 0,9 ml de THA pur, et l'on complétait l'injection de butène-1 jusqu'à obtenir une pression de 2 bars. On injectait ensuite successivement dans le réacteur de l'hydrogène et de l'éthylène jusqu'à obtenir des pressions partielles d'hydrogène et d'éthylène respectivement égales à 1,5 bar et 13 bars.

On introduisait alors dans ledit réacteur 16,8 g du solide hydrocarboné actif obtenu comme indiqué dans la partie a de cet exemple, en effectuant cette introduction par poussée à l'azote avec poursuite de l'injection d'azote jusqu'à ce que la pression totale à l'intérieur du réacteur eût atteint 21 bars. On maintenait ensuite la pression dans le réacteur à cette valeur par injection d'éthylène et de butène-1 dans un rapport molaire butène-1 éthylène égale à 0,0466.

Après 4 heures de réaction, la polymérisation était arrêtée par décompression du réacteur, purge à l'azote et refroidissement dudit réacteur.

On recueillait 1180 g de copolymère éthylène/butène-1 (LLDPE), dont les caractéristiques sont données ci-après.

| | |
|---|---|
| – Teneur en Ti (p.p.m. poids): | 1,65 |
| – Teneur en Al (p.p.m. poids): | 88 |
| – Densité: | 0,9265 |
| – Diamètre moyen des particules (microns): | 410 |
| – Masse volumique apparente du produit tassé (g/cm$^3$): | 0,394 |
| – Indice de fusion ($MI^{2,16}_{190\,°C}$): | 0,14 |

EXEMPLE 5:

a) Préparation du solide hydrocarboné actif en utilisant une phase liquide à base de triéthylaluminium:

On opérait dans un réacteur muni d'un agitateur, tournant à la vitesse de 340 tours/minute, et maintenu à la température de 90 °C tout au long de la préparation du solide hydrocarboné actif.

Dans le réacteur séché et maintenu sous une pression d'azote égale à 1 bar, on introduisait 300 g d'un support solide poreux consistant en une poudre de polyéthylène basse densité linéaire présentant un diamétre moyen de particules égal à 510 microns, puis 90 ml d'une solution à 187 g/l de triéthylaluminium (en abrégé TEA) dans l'heptane, et l'ensemble était homogénéisé sous atmosphère d'azote et ensuite mis sous vide pour évaporer l'heptane.

Au contenu du réacteur, on ajoutait alors, par poussée à l'azote, 7,2 g de la composante renfermant TiCl4 utilisée dans l'exemple 1, et l'on poursuivait l'injection d'azote jusqu'à obtenir une pression de 10 bars tout en homogénéisant le mélange contenu dans le réacteur pour obtenir une masse pulvérulente dans laquelle le rapport du nombre d'atomes d'aluminium issu du TEA au nombre d'atomes de titane était égal à 52,3.

On admettait alors dans le réacteur de l'éthylène et du butène-1 avec des débits tels que le rapport molaire butène-1:éthylène était égal à 0,0466 à l'entrée du réacteur et que le débit d'éthylène représentait 310 l/heure, l'injection des oléfines étant poursuivie pendant 3,5 heures.

Au bout de cette durée on arrêtait la polymérisation par décompression du réacteur, puis purge sous azote et refroidissement dudit réacteur.

On recueillait 1600 g d'un solide hydrocarboné actif en poudre, que l'on stockait en boîte à gant sous atmosphère inerte.

Ce solide hydrocarboné actif présentait les caractéristiques suivantes:

| | |
|---|---|
| – Teneur en Ti (p.p.m. poids): | 81 |
| – Teneur en Al (p.p.m. poids): | 2387 |
| – Densité: | 0,918 |
| – Diamètre moyen des particules (microns): | 720 |
| – Indice du fusion ($MI^{2,16}_{190\,°C}$): | 0,024 |

b) Polymérisation d'un mélange d'éthylène et de butène-1 en phase gazeuse au contact du solide hydrocarboné actif pour former un copolymère éthylène/butène-1 (LLDPE):

On opérait dans un réacteur muni d'un agitateur, tournant avec une vitesse de rotation de 400 tours/minute, et maintenu à la température de 85 °C pendant toute la polymèrisation.

Dans le réacteur séché et maintenu sous une pression d'azote de 1 bar, on introduisait 9 ml d'une solution à 187 g/l de TEA dans l'heptane et l'on évaporait l'heptane sous vide.

On injectait alors successivement dans le réacteur du butène-1, de l'hydrogène et de l'éthylène jusqu'à obtenir des pressions de butène-1, d'hydrogène et d'éthyléne égales respectivement à 2 bars, 3 bars et 12 bars, puis l'on introduisait dans ledit réacteur 40 g du solide hydrocarboné actif obtenu comme indiqué dans la partie a de cet exemple, en effectuant cette introduction par poussée à l'azote avec poursuite de l'injection d'azote jusqu'à ce que la pression totale à l'intérieur du réacteur eût atteint 21 bars. On maintenait ensuite la pression dans le réacteur à cette valeur par injection d'éthylène et de butène-1 dans un rapport molaire butène-1:éthylène égal à 0,0466, ladite injection étant poursuivie pendant une durée de 3,5 heures.

Au bout de cette durée, on arrêtait la polymérisation par décompression du réacteur, purge à l'azote et refroidissement dudit réacteur.

On recueillait 1104 g de copolymère éthylène/butène-1 (LLDPE) présentant les caractéristiques suivantes:

| | |
|---|---|
| – Teneur en Ti (p.p.m. poids): | 2,93 |
| – Teneur en Al (p.p.m. poids): | 432 |
| – Densité: | 0,9285 |

- Diamètre moyen des particules (microns): 980
- Masse volumique apparente du produit tassé ($g/cm^3$); 0,344
- Indice de fusion ($MI^{2,16}_{190\,°C}$): 2,7

EXEMPLE 6:

a) Préparation du solide hydrocarboné actif:

Dans un ballon de 1 litre séché et maintenu sous atmosphère d'azote, on introduisait 200 g d'un support solide poreux, consistant en une poudre de polyéthylène basse densité présentant une granulométrie comprise entre 100 et 160 microns ainsi qu'un diamètre moyen de particules de 125 microns, et 12,45 g de THA pur, et l'ensemble était homogénéisé sous atmosphère d'azote. Au produit obtenu on ajoutait alors, sous atmosphère d'azote, 11,6 g de la composante à base de TiCl4 utilisée dans l'exemple 1. Le mélange résultant était alors homogénéisé sous azote pour donner une masse pulvérulente dans laquelle le rapport du nombre d'atomes d'aluminium issu du THA au nombre d'atomes de titane était égal à 10.

La masse pulvérulente obtenue était transférée dans un réacteur muni d'un agitateur, tournant à la vitesse de 350 tours/minute, et maintenu à une température de 70 °C sous atmosphère d'azote. Ledit transfert était réalisé par poussée à l'azote avec poursuite de l'injection d'azote jusqu'à obtenir une pression d'azote de 5,5 bars. On injectait ensuite de l'hydrogène dans le réacteur jusqu'à obtenir une pression d'hydrogène égale à 0,5 bar.

On admettait ensuite dans ledit réacteur, toujours maintenu à 70 °C, de l'éthylène et du butène-1 pendant 30 minutes, avec les débits tels que le rapport molaire butène-1:éthylène, à l'entrée du réacteur, était égal à 0,0466 et le débit d'éthylène représentait 100 l/heure, puis on continuait l'injection d'éthylène et de butène-1 pendant 3,5 heures avec un débit d'éthylène égal à 200 l/heure et un rapport molaire butène-1:éthylène toujours égal à 0,0466.

A partir de la troisième heure on introduisait également dans le réacteur 48 g de THA à raison de 2 ml/minute.

Après une durée d'injection des oléfines égale à 4 heures on arrêtait la polymérisation par décompression du réacteur, puis purge sous azote et refroidissement dudit réacteur.

On recueillait 1309 g d'un solide hydrocarboné actif en poudre, que l'on stockait en boîte à gant sous atmosphère inerte.

Ce solide hydrocarboné actif présentait les caractéristiques ci-après:

- Teneur en Ti (p.p.m. poids): 159
- Teneur en Al (p.p.m. poids): 4386
- Densité: 0,9263
- Diamètre moyen des particules (microns): 270
- Masse volumique apparente du produit tassé ($g/cm^3$): 0,401
- Indice de fusion ($MI^{2,16}_{190\,°C}$): 2,2

b) Polymérisation d'un mélange d'éthylène et de butène-1 en phase gazeuse au contact du solide hydrocarboné actif modifié par un donneur d'électrons avec obtention d'un copolymère éthylène/butène-1 (LLDPE)

On opérait dans un réacteur muni d'un agitateur, tournant avec une vitesse de rotation de 370 tours/minute, et maintenu à la température de 80 °C pendant toute la polymérisation.

Dans le réacteur séché et maintenu sous vide, on injectait successivement 1,8 bar de butène-1, 1,5 bar d'hydrogène, et 13,5 bars d'éthylène. On introduisait alors dans ledit réacteur 18,1 g du solide hydrocarboné actif obtenu comme indiqué dans la partie a de cet exemple, ladite quantité de solide hydrocarboné actif ayant été préalablement imprégnée au moyen de 1 ml d'une solution obtenue en dissolvant 1,3 g d'acétate de vinyle dans 60 ml d'isopentane, l'acétate de vinyle jouant le rôle de donneur d'électrons. Cette introduction du solide hydrocarboné actif dans le réacteur était effectuée par poussée à l'azote avec poursuite de l'introduction d'azote pour obtenir une pression d'azote égale à 4,2 bars. Le rapport du nombre d'atomes d'aluminium au nombre de moles d'acétate de vinyle dans le réacteur était égal à 11,65 tandis que le rapport du nombre d'atomes d'Al au nombre d'atomes de Ti était égal à 49,4. On maintenait ensuite la pression dans le réacteur à la valeur de 21 bars par injection d'éthylène et de butène-1 dans un rapport molaire butène-1:éthylène égal à 0,0466, en poursuivant cette injection pendant 2 heures et 15 minutes.

Au bout de cette durée on arrêtait la polymérisation par décompression du réacteur, purge à l'azote et refroidissement dudit réacteur.

La polymérisation démarrait immédiatement après l'introduction du solide hydrocarboné actif et l'activité maximale atteinte correspondait à 535 000 g de polymère par gramme de titane et par heure.

On recueillait 620 g de copolymère éthylène/butène-1 (LLDPE), dont les caractéristiques sont données ci-dessous:

- Teneur en Ti (p.p.m. poids): 4,6
- Teneur en Al (p.p.m. poids): 128
- Densité: 0,923
- Diamètre moyen des particules (microns): 900
- Masse volumique apparente du produit tassé ($g/cm^3$): 0,316
- Indice de fusion ($MI^{2,16}_{190\,°C}$): 0,61

A titre de comparaison, on répétait cet essai sans utiliser d'acétate de vinyle, avec une quantité de solide hydrocarboné actif égale à 15 g et en arrêtant la polymérisation au bout de 4 heures, les autres conditions opératoires restant les mêmes par ailleurs.

On observait un démarrage immédiat de la polymérisation après l'introduction du solide hydrocarboné actif et l'activité maximale atteignait une valeur de 900 000 g de polymère par gramme de titane et par heure.

On recueillait, au cours de cet essai comparatif, 1245 g de copolymère éthylène/butène-1 (LLDPE) présentant les caractéristiques suivantes:

- Teneur en Ti (p.p.m. poids): 1,91
- Teneur en Al (p.p.m. poids): 53
- Densité: 0,922
- Diamètre moyen des particules (microns): 1200
- Masse volumique apparente du produit tassé (g/cm$^3$): 0,340
- Indice de fusion ($MI_{190\,°C}^{2,16}$): 0,8

L'utilisation d'un donneur d'électrons, ici l'acétate de vinyle, conduit à une activité maximale plus modérée que celle obtenue en l'absence de donneur d'électrons, ce qui permet de contrôler plus facilement ladite activité et par conséquent le déroulement de la polymérisation.

EXEMPLE 7:

a) Préparation du solide hydrocarboné actif:

Dans un ballon de 1 litre séché et maintenu sous atmosphère d'azote, on introduisait 200 g d'un support solide poreux, consistant en une poudre de polyéthylène basse densité présentant une granulométrie comprise entre 160 et 250 microns et un diamètre moyen de particules de 210 microns, et 12,7 g de THA pur, et l'ensemble était homogénéisé sous atmosphère d'azote.

Au produit obtenu on ajoutait alors, sous atmosphère d'azote, 10,3 g de la composante à base de TiCl4 décrite dans l'exemple 1. Le mélange résultant était alors homogénéisé sous azote pour donner une masse pulvérulente dans laquelle rapport du nombre d'atomes d'aluminium issu du THA au nombre d'atomes de titane était égal à 11,54.

La masse pulvérulente obtenue était transférée dans un réacteur muni d'un agitateur, tournant à la vitesse de 400 tours/minute, et maintenu à une température de 70 °C sous atmosphère d'azote. Ledit transfert était réalisé par poussée à l'azote avec poursuite de l'injection d'azote jusqu'à obtenir une pression d'azote de 5 bars. On injectait ensuite de l'hydrogène dans le réacteur jusqu'à obtenir une pression d'hydrogène égale à 0,5 bar.

On admettait ensuite dans le réacteur, toujours maintenu à 70 °C, de l'éthylène et du butène-1, pendant 30 minutes, avec des débits tels que le rapport molaire butène-1:éthylène, à l'entrée du réacteur, était égal à 0,0466 et le débit d'éthylène représentait 100 l/heure, puis on continuait l'injection d'éthylène et de butène-1 avec un débit d'éthylène égal à 200 l/heure et un rapport molaire butène-1:éthylène toujours égal à 0,0466.

Après une durée totale d'injection des oléfines dans le réacteur égale à 2 heures, on arrêtait la polymérisation par décompression du réacteur, puis purge sous azote et refroidissement dudit réacteur.

On recueillait 670 g d'un solide hydrocarboné actif pulvérulent, que l'on stockait en boîte à gant sous atmosphère inerte.

Ce solide hydrocarboné actif présentait les caractéristiques suivantes:

- Teneur en Ti (p.p.m. poids): 276
- Teneur en Al (p.p.m. poids): 1800
- Densité: 0,927
- Diamètre moyen des particules (microns): 270
- Masse volumique apparente du produit tassé (g/cm$^3$): 0,396
- Indice de fusion ($MI_{190\,°C}^{2,16}$): 8,75

b) Polymérisation d'un mélange d'éthylène et de butène-1 en phase gazeuse au contact du solide hydrocarboné actif modifié par un donneur d'électrons avec obtention de LLDPE:

On opérait dans un réacteur muni d'un agitateur, tournant avec une vitesse de rotation de 400 tours/minute, et maintenu à la température de 85 °C pendant toute la polymérisation.

Hors du réacteur, on faisait tout d'abord réagir, à température ambiante, 3 ml d'une solution à 236 g/l de THA dans l'heptane avec 1,3 ml d'une solution à 150 g/l de paratoluate de méthyle (en abrégé MPT) dans l'heptane, et l'on mélangeait le produit de la réaction avec 5,2 g du solide hydrocarboné actif obtenu comme décrit dans la partie a de cet exemple.

Dans le réacteur séché et maintenu sous vide, on injectait successivement 2,8 bars de butène-1, 1,8 bar d'hydrogène et 12,4 bars d'éthylène. On introduisait alors dans ledit réacteur le solide hydrocarboné actif modifié préparé comme indiqué ci-dessus, ladite introduction étant effectuée par poussée à l'azote avec poursuite de l'introduction d'azote jusqu'à obtenir une pression d'azote égale à 4 bars.

On ajoutait alors le réacteur 4 ml de la solution à 236 g/l de THA dans l'heptane, ce qui donnait un rapport du nombre d'atomes d'aluminium au nombre de molécules de MPT dans le réacteur égal à 4,7 tandis que le rapport du nombre d'atomes d'Al au nombre d'atomes de Ti était égal à 206. La réaction démarrait doucement et l'on maintenait la pression dans le réacteur à la valeur de 21 bars par injection d'éthylène et de butène-1 dans un rapport molaire butène-1:éthylène égal à 0,0466, ladite injection étant poursuivie pendant 3,5 heures.

Au bout de cette durée on arrêtait la polymérisation par décompression du réacteur, purge à l'azote et refroidissement dudit réacteur.

On recueillait, au cours de cet essai, 910 g de copolymère éthylène/butène-1 (LLDPE) présentant les caractéristiques ci-après:

- Teneur en Ti (p.p.m. poids): 1,57
- Teneur en Al (p.p.m. poids): 182
- Densité: 0,922
- Diamètre moyen des particules (microns): 1700

– Masse volumique apparente du produit tassé ($g/cm^3$): 0,371
– Indice de fusion ($MI^{2,16}_{190\,°C}$): 0,1

A titre de comparaison, on répétait cet essai sans utiliser de MPT, les autres conditions opératoires restant les mêmes.

La réaction de polymérisation démarrait brutalement et l'on obtenait une activité maximale environ double de celle obtenue en présence de MPT.

On observe encore que l'utilisation d'un donneur d'électrons, ici le MPT, permet de contrôler l'activité maximale du système catalytique et par conséquent le déroulement de la polymérisation.

EXEMPLE 8:

a) Préparation du solide hydrocarboné actif en utilisant l'éthylène et l'hexène-1 comme oléfines:

On opérait comme décrit dans la partie a de l'exemple 7 en utilisant toutefois 16 ml de THA pur et 9,9 g de la composante à base de TiCl4 lors de la préparation de la masse pulvérulente, et en remplaçant le butène-1 par de l'hexène-1 en quantité telle que le rapport molaire hexène-1 : éthylène à l'entrée du réacteur était égal à 0,025 au cours de chacune des phases de l'injection des oléfines dans le réacteur, la polymérisation étant arrêtée après une durée totale d'injection des oléfines égale à 4 heures.

On recueillait 1200 g d'un solide hydrocarboné actif pulvérulent, que l'on stockait en boîte à gant sous atmosphère inerte.

Ce solide hydrocarboné actif présentait les caractéristiques suivantes:

– Teneur en Ti /p.p.m. poids): 148
– Teneur en Al (p.p.m. poids): 1013
– Densité: 0,922
– Diamètre moyen des particules (microns): 255
– Masse volumique apparente du produit tassé ($g/cm^3$): 0,358
– Indice de fusion ($MI^{2,16}_{190\,°C}$): 1,45

b) Polymérisation d'un mélange d'éthylène et de butène-1 en phase gazeuse au contact du solide hydrocarboné actif avec obtention de LLDPE:

On opérait dans un réacteur muni d'un agitateur, tournant avec une vitesse de rotation de 400 tours/minute, et maintenu à la température de 85 °C pendant toute la polymérisation.

Dans le réacteur séché et maintenu sous vide, on injectait successivement 3,2 bars de butène-1, 1,8 bar d'hydrogène, et 12 bars d'éthylène. On introduisait alors dans ledit réacteur 14 g du solide hydrocarboné actif obtenu comme indiqué dans la partie a de cet exemple, ladite introduction étant effectuée par poussée à l'azote avec poursuite de l'introduction d'azote jusqu'à l'obtention d'une pression totale de 21 bars dans le réacteur.

On ajoutait alors dans le réacteur 3 ml d'une solution à 236 g/l de THA dans l'heptane, pour faire démarrer la réaction, puis maintenait la pression dans le réacteur à la valeur de 21 bars par injection d'éthylène et de butène-1 dans un rapport molaire butène-1 : éthylène égal à 0,0466. Le rapport du nombre d'atomes d'Al au nombre d'atomes de Ti dans le milieu réactionnel contenu dans le réacteur était égal à 71.

L'injection des oléfines dans le réacteur était poursuivie pendant une durée de 4 heures, puis on arrêtait la polymérisation par décompression du réacteur, purge à l'azote et refroidissement dudit réacteur.

On recueillait 1650 g de copolymère éthylène/butène-1 (LLDPE) présentant les caractéristiques suivantes:

– Teneur en Ti (p.p.m. poids): 1,25
– Teneur en Al (p.p.m. poids); 50
– Densité: 0,920
– Diamètre moyen des particules (microns): 1500
– Masse volumique apparente du produit tassé ($g/cm^3$): 0,355
– Indice de fusion ($MI^{2,16}_{190\,°C}$): 0,95

c) Polymérisation d'un mélange d'éthylène et de butène-1 en phase gazeuse au contact du solide hydrocarboné actif vieilli avec obtention de LLDPE:

On opérait dans un réacteur muni d'un agitateur, tournant avec une vitesse de rotation de 400 tours/minute, et maintenu à la température de 85 °C pendant toute la polymérisation.

Dans le réacteur séché et maintenu sous vide, on injectait successivement 2,8 bars de butène-1, 1,8 bar d'hydrogène, et 12,4 bars d'éthylène, puis 1 ml d'une solution à 80% en poids d'isoprénylaluminium dans l'heptane. On introduisait alors dans ledit réacteur 18 g du solide hydrocarboné actif obtenu en laissant vieillir, pendant deux mois en boîte à gant sous atmosphère d'azote, le solide hydrocarboné actif préparé comme indiqué dans la partie a de cet exemple, ladite introduction étant effectuée par poussée à l'azote avec poursuite de l'introduction d'azote jusqu'à obtenir une pression d'azote égale à 4 bars. On maintenait ensuite la pression dans le réacteur à la valeur de 21 bars par injection d'éthylène et de butène-1 dans un rapport molaire butène-1 : éthylène égal à 0,0466 à l'entrée du réacteur. Le rapport du nombre d'atomes d'Al au nombre d'atomes de Ti dans le milieu réactionnel contenu dans le réacteur était égal à 79.

L'injection des oléfines dans le réacteur était poursuivie pendant 4 heures, puis on arrêtait la polymérisation par décompression du réacteur, purge à l'azote et refroidissement dudit réacteur.

On recueillait 2050 g de copolymère éthylène/butène-1 (LLDPE) ayant les caractéristiques suivantes:

- Teneur en Ti (p.p.m. poids): 1,29
- Teneur en Al (p.p.m. poids): 57
- Densité: 0,921
- Diamètre moyen des particules (microns): 1400
- Masse volumique apparente du produit tassé ($g/cm^3$): 0,508
- Indice de fusion ($MI^{2,16}_{190\,°C}$): 0,97

EXEMPLE 9:

a) Préparation du solide hydrocarboné actif en utilisant l'éthylène comme seule oléfine:

Dans un ballon de 1 litre séché et maintenu sous atmosphère d'azote, on introduisait 187 g d'un support solide poreux, consistant en une poudre de polyéthylène basse densité présentant une granulométrie comprise entre 100 et 160 microns et un diamètre moyen de particules de 140 microns, et 13,5 g de THA pur, et l'ensemble était homogénéisé sous atmosphère d'azote.

Au produit obtenu on ajoutait alors, sous atmosphère d'azote, 12,07 g de la composante à base de TiCl4 décrite dans l'exemple 1. Le mélange résultant était alors homogénéisé sous azote pour donner une masse pulvérente dans laquelle le rapport du nombre d'atomes d'Al issu du THA au nombre d'atomes de Ti était égal à 10,47.

La masse pulvérulente obtenue était transférée dans un réacteur muni d'un agitateur, tournant à la vitesse de 400 tours/minute, et maintenu à une température de 70 °C sous atmosphère d'azote. Ledit transfert était réalisé par poussée à l'azote avec poursuite de l'injection d'azote jusqu'à obtenir une pression d'azote de 4,5 bars. On injectait ensuite de l'hydrogène dans le réacteur jusqu'à l'obtention d'une pression d'hydrogène égale à 0,5 bar.

On admettait ensuite de l'éthylène dans le réacteur, toujours maintenu à 70 °C, avec un débit de 120 l/heure pendant 30 minutes puis de 220 l/heure par la suite.

Deux heures après le début d'injection de l'éthylène, on ajoutait 25 ml de THA pur au contenu du réacteur.

Après une durée totale d'injection d'éthylène égale à 4 heures, on arrêtait la polymérisation par décompression du réacteur, puis purge sous azote et refroidissement dudit réacteur.

On recueillait 1165 g de solide hydrocarboné actif en poudre, que l'on stockait en boîte à gant sous atmosphère inerte.

Ce solide hydrocarboné actif présentait les caractéristiques ci-après:

- Teneur en Ti (p.p.m. poids): 186
- Teneur en Al (p.p.m. poids): 2731
- Diamètre moyen des particules (microns): 350
- Masse volumique apparente du produit tassé ($g/cm^3$): 0,351
- Indice de fusion ($MI^{2,16}_{190\,°C}$): 0,18
- Densité: 0,960

b) Polymérisation d'un mélange d'éthylène et de butène-1 en phase gazeuse au contact du solide hydrocarboné actif avec obtention de LLDPE:

On opérait dans un réacteur muni d'un agitateur, tournant avec une vitesse de rotation de 400 tours/minute, et maintenu à la température de 85 °C pendant toute la polymérisation.

Dans le réacteur séché et maintenu sous vide, on injectait successivement 3 bars de butène-1, 2 bars d'hydrogène et 12 bars d'éthylène. On introduisait alors dans ledit réacteur 17 g du solide hydrocarboné actif préparé comme indiqué dans la partie a de cet exemple après avoir préalablement déposé sur ladite quantité de solide hydrocarboné actif 0,6 ml de THA pur et 2 ml d'une solution à 115 g/l de MPT dans l'heptane, ladite introduction étant effectuée par poussée à l'azote avec poursuite de l'introduction d'azote jusqu'à obtenir une pression totale de 21 bars dans le réacteur.

On ajoutait alors dans le réacteur 11 ml d'une solution à 118 g/l de tri n-octylaluminium dans l'heptane, ce qui donnait un rapport du nombre d'atomes d'Al au nombre d'atomes de Ti égal à 106, tandis que le rapport du nombre d'atomes d'Al au nombre de molécules de MPT était égal à 4,57.

A la suite de l'addition de la quantité de tri n-octylaluminium la réaction de polymérisation démarrait doucement, et l'on maintenait la pression totale du réacteur à la valeur de 21 bars par injection d'éthylène et de butène-1 dans un rapport molaire butène-1:éthylène, à l'entrée du réacteur, égal à 0,0466.

Après une durée d'injection des oléfines égale à 4 heures, au cours de laquelle la polymérisation se déroulait d'une manière stable, on arrêtait la polymérisation par décompression du réacteur, purge à l'azote et refroidissement dudit réacteur.

On recueillait 1740 g de copolymère éthylène/butène-1 (LLDPE) présentant les caractéristiques suivantes:

- Teneur en Ti (p.p.m. poids): 1,81
- Teneur en Al (p.p.m. poids): 109
- Diamètre moyen des particules (microns): 840
- Densité: 0,919
- Masse volumique apparente du produit tassé ($g/cm^3$): 0,462
- Indice de fusion ($MI^{2,16}_{190\,°C}$): 1,1

L'utilisation de paratoluate de méthyle comme donneur d'électrons permet encore dans ce cas de contrôler l'activité de la réaction de polymérisation dès son début et ainsi d'assurer un déroulement régulier de cette polymérisation.

EXEMPLE 10:

a) Préparation du solide hydrocarboné actif en utilisant une composante à base de TiCl4 renfermant de la silice:

Dans un ballon de 1 litre séché et maintenu sous atmosphère d'azote, on introduisait 100 g d'un support solide poreux, consistant en une poudre de polyéthylène basse densité présentant une granulométrie comprise entre 160 et 250 microns et un diamètre de particules d'environ 200 microns, et 31 ml de THA pur, et l'ensemble était homogénéisé sous atmosphère d'azote.

Au produit obtenu on ajoutait alors, sous atmosphère d'azote, 42,2 g d'une composante à base de TiCl4 renfermant, en poids, 1,3% de titane, 3,3% de magnésium et 10,2% de chlore, le reste étant constitué par de la silice sous forme d'un gel. Le mélange résultant était alors homogénéisé sous azote pour donner une masse pulvérulente dans laquelle le rapport du nombre d'atomes d'Al au nombre d'atomes de Ti était égal à 7,62.

La masse pulvérulente obtenue était transférée dans un réacteur muni d'un agitateur, tournant à la vitesse de 400 tours/minute, et maintenu à une température de 70 °C sous atmosphère d'azote. Ledit transfert était réalisé par poussée à l'azote avec poursuite de l'injection d'azote jusqu'à obtenir une pression d'azote de 5 bars. On injectait ensuite de l'hydrogène dans le réacteur jusqu'à l'obtention d'une pression d'hydrogène égale à 0,7 bar.

On admettait ensuite dans le réacteur, toujours maintenu à 70 °C, de l'éthylène et du butène-1 avec des débits tels que le rapport molaire butène-1 : éthylène à l'entrée du réacteur était égal à 0,0466 et le débit d'éthylène représentait 200 l/heure.

Après une durée totale d'injection des oléfines dans le réacteur égale à 70 minutes, on arrêtait la polymérisation par décompression du réacteur, puis purge sous azote et refroidissement dudit réacteur.

On recueillait 454 g d'un solide hydrocarboné actif pulvérulent, que l'on stockait en boîte à gant sous atmosphère inerte.

Ce solide hydrocarboné actif présentait les caractéristiques suivantes:

| | |
|---|---|
| – Teneur en Ti (p.p.m. poids): | 1208 |
| – Diamètre moyen des particules (microns): | 310 |
| – Masse volumique apparente du produit tassé (g/cm$^3$): | 0,449 |

b) Polymérisation d'un mélange d'éthylène et de butène-1 en phase gazeuse au contact du solide hydrocarboné actif avec obtention de LLDPE:

On opérait dans un réacteur muni d'un agitateur, tournant avec une vitesse de rotation de 400 tours/minute, et maintenu à la température de 85 °C pendant toute la polymérisation.

Dans le réacteur séché et maintenu sous vide, on introduisait tout d'abord 20 g de LLDPE en poudre issu d'une préparation précédente, puis successivement 3 bars de butène-1, 2 bars d'hydrogène et 12 bars d'éthylène. On introduisait alors dans ledit réacteur 4 g du solide hydrocarboné actif préparé comme indiqué dans la partie a de cet exemple, ladite introduction étant réalisée par poussée à l'azote avec poursuite de l'injection d'azote jusqu'à obtenir une pression totale de 21 bars dans le réacteur. On maintenait ensuite la pression totale du réacteur à cette valeur par injection d'éthylène et de butène-1 dans un rapport molaire butène-1 : éthylène égal à 0,0466.

Après 4 heures d'injection des oléfines on arrêtait la polymérisation comme indiqué dans les exemples précédents.

On recueillait 1070 g de copolymère éthylène/butène-1 (LLDPE) présentant les caractéristiques suivantes:

| | |
|---|---|
| – Teneur en SiO2 (p.p.m. poids): | 296 |
| – Diamètre moyen des particules (microns): | 1000 |
| – Densité: | 0,918 |
| – Masse volumique apparente du produit tassé (g/cm$^3$): | 0,402 |
| – Indice de fusion ($MI^{2,16}_{190\,°C}$): | 2,7 |

EXEMPLE 11:

a) Préparation du solide hydrocarboné actif en utilisant l'isoprénylaluminium comme composé organoaluminique:

Dans un ballon de 1 litre séché et maintenu sous atmosphère d'azote, on introduisait 150 g d'un support solide poreux, consistant en une poudre de polyéthylène basse densité présentant une granulométrie inférieure à 250 microns et un diamètre moyen de particules égal à 150 microns, et 12 ml d'une solution à 80% en poids d'isoprénylaluminium (en abrégé IPRA) das l'heptane, et l'ensemble était homogénéisé sous atmosphère d'azote.

Au produit obtenu on ajoutait 12 g de la composante à base de TiCl4 définie dans l'exemple 1. Le mélange résultant était alors homogénéisé sous azote pour donner une masse pulvérulente dans laquelle le rapport du nombre d'atomes d'Al au nombre d'atomes de Ti était égal à 9,87.

La masse pulvérulente obtenue était transférée dans un réacteur muni d'un agitateur, tournant à la vitesse de 350 tours/minute, et maintenu à une température de 70 °C sous atmosphère d'azote. Ledit transfert était réalisé par poussée à l'azote avec poursuite de l'injection d'azote jusqu'à obtenir une pression d'azote égale à 5 bars. On injectait ensuite de l'hydrogène dans le réacteur jusqu'à obtenir une pression d'hydrogène égale à 0,5 bar.

On admettait ensuite dans le réacteur, toujours maintenu à 70 °C, de l'éthylène et du butène-1, pendant 30 minutes, avec des débits tels que le rapport molaire butène-1 : éthylène, à l'entrée du réacteur, était égal à 0,0466 et le débit d'éthylène représentait 100 l/heure, puis on continuait l'injection d'éthylène et de butène-1 avec un débit d'éthylène porté à 200 l/heure et un rapport molaire butène-1 : éthylène égal à 0,0466.

Après une durée totale d'injection des oléfines dans le réacteur égale à 3,75 heures, on arrêtait la polymérisation comme indiqué dans les exemples précédents.

On recueillait 1020 g d'un solide hydrocarboné actif pulvérulent, que l'on stockait en boîte à gant sous atmosphère inerte.

Ce solide hydrocarboné actif présentait les caractéristiques ci-après:

| | |
|---|---|
| – Teneur en Ti (p.p.m. poids): | 221 |
| – Teneur en Al (p.p.m. poids): | 1178 |
| – Diamètre moyen des particules (microns): | 250 |
| – Masse volumique apparente du produit tassè ($g/cm^3$): | 0,395 |
| – Densité: | 0,9215 |
| – Indice de fusion ($MI^{2,16}_{190\,°C}$): | 2 |

b) Polymérisation d'un mélange d'éthylène et de butène-1 en phase gazeuse au contact du solide hydrocarboné actif avec obtention de LLDPE:

On opérait dans un réacteur muni d'un agitateur, tournant avec une vitesse de rotation de 400 tours/minute, et maintenu à la température de 85 °C pendant toute la polymérisation.

Dans le réacteur séché on introduisait 20 g d'un polyéthylène basse densité linéaire présentant un diamètre moyen de particules d'environ 800 microns, puis, après avoir fait le vide dans ledit réacteur, on y injectait successivement 1 bar de butène-1, 5,33 m d'une solution à 200 g/l d'IPRA dans l'heptane, 2 bars de butène-1, 1,8 bar d'hydrogène et enfin 12,2 bars d'éthylène. On introduisait alors dans le réacteur 16,5 g du solide hydrocarboné actif obtenu comme indiqué dans la partie a de cet exemple, ladite introduction étant effectuée par poussée à l'azote avec poursuite de l'injection d'azote jusqu'à obtenir une pression totale dans le réacteur égale à 21 bars. On maintenait ensuite la pression totale du réacteur à cette valeur par injection d'éthylène et de butène-1 dans un rapport molaire butène-1:éthylène à 0,0466.

Après 2 heures d'injection des oléfines on arrêtait la polymérisation comme décrit dans les exemples précédents.

On recueillait 1550 g de copolymère éthylène/butène-1 (LLDPE) présentant les caractéristiques suivantes:

| | |
|---|---|
| – Teneur en Ti (p.p.m. poids): | 2,24 |
| – Teneur en Al (p.p.m. poids): | 111 |
| – Diamètre moyen des particules (microns): | 1500 |
| – Densité: | 0,9175 |
| – Masse volumique apparente du produit tassé ($g/cm^3$): | 0,398 |
| – Indice de fusion ($MI^{2,16}_{190\,°C}$): | 1,3 |

Le copolymère obtenu au bout de 2 heures de polymérisation renfermait seulement 2,24 p.p.m. de Ti, ce qui montre que l'utilisation d'IPRA en conjugaison avec le solide hydrocarboné actif améliore l'activité moyenne du système catalytique, c'est-à-dire la quantité de polymère produite par gramme de Ti et par heure.

En outre, la densité du copolymère obtenu en présence d'IPRA est plus faible que celle d'un copolymère similaire obtenu en l'absence d'IPRA, ce qui montre également que l'IPRA permet une meilleure incorporation de l'alpha-oléfine associée à l'éthylène au cours de la copolymérisation.

c) Préparation d'un terpolymère éthylène/butène-1/hexène-1:

On opérait dans un réacteur muni d'un agitateur, tournant à une vitesse de rotation de 400 tours/minute, et maintenu à la température de 85 °C pendant toute la polymérisation.

Dans le réacteur séché, on introduisait 20 g d'un polyéthylène basse densité linéaire présentant un diamètre moyen de particules d'environ 800 microns, puis, après avoir fait le vide dans ledit réacteur, on y injectait successivement 1 bar d'un mélange de butène-1 et d'hexène-1 dans un rapport pondéral hexène-1:butène-1 égal à 0,168, puis 1,01 g de THA, 2 bars du mélange de butène-1 et d'hexène-1, 1,5 bar d'hydrogène et enfin 12,5 bars d'éthylène. On introduisait alors dans le réacteur 10 g du solide hydrocarboné actif obtenu comme décrit dans la partie a de cet exemple, ladite introduction étant réalisée par poussée à l'azote avec poursuite de l'injection d'azote jusqu'à obtenir une pression totale dans le réacteur égale à 21 bars. On maintenait ensuite la pression à cette valeur en injectant par heure 1000 l d'éthylène gazeux et 185 ml d'un mélange liquide de butène-1 et d'hexène-1 dans un rapport pondéral hexène-1:butène-1 égal à 0,168.

Après 3,5 heures d'injection des oléfines on arrêtait la polymérisation comme indiqué dans les exemples précédents.

On recueillait 1050 g de terpolymère éthylène/butène-1/hexène-1 présentant les caractéristiques suivantes:

| | |
|---|---|
| – Teneur en Ti (p.p.m. poids): | 2 |
| – Teneur en Al (p.p.m. poids): | 102 |
| – Diamètre moyen des particules (microns): | 1200 |
| – Densité: | 0,916 |
| – Masse volumique apparente du produit tassé ($g/cm^3$): | 0,403 |
| – Indice de fusion ($MI^{2,16}_{190\,°C}$): | 0,75 |

EXEMPLE 12:

a) Préparation du solide hydrocarboné actif en utilisant une composante à base de TiCl4 de faible granulométrie:

Dans un ballon de 1 litre séché et maintenu sous atmosphère d'azote, on introduisait 170 g d'un support solide poreux, consistant en une poudre de polyéthylène basse densité présentant une granulométrie inférieure à 250 microns et un diamètre moyen de particules égal à 150 microns,

et 11,8 g de THA pur, et l'ensemble était homogénéisé sous atmosphère d'azote.

Au produit obtenu on ajoutait alors, sous atmosphère d'azote, 4,91 g d'une composante à base de TiCl4, obtenue à partir de TiCl4 et MgCl2 et présentant un diamètre moyen de particules de 15 microns, ladite composante renfermant en poids, 9,5% de Ti et 9,9% de Mg. Le mélange résultant était alors homogénéisé sous azote pour donner une masse pulvérulente dans laquelle le rapport du nombre d'atomes d'Al au nombre d'atomes de Ti était égal à 4,26.

La masse pulvérulente obtenue était transférée dans un réacteur muni d'un agitateur, tournant à la vitesse de 350 tours/minute, et maintenu à une température de 70 °C sous atmosphère d'azote. Ledit transfert était réalisé par poussée à l'azote avec poursuite de l'injection d'azote jusqu'à obtenir une pression d'azote de 5,5 bars dans le réacteur. On injectait ensuite 0,5 bar d'hydrogène dans ledit réacteur.

On admettait ensuite dans le réacteur, toujours maintenu à 70 °C, de l'éthylène et du butène-1, pendant 30 minutes, avec des débits tels que le rapport molaire butène-1:éthylène, à l'entrée du réacteur, était égal à 0,0466 et le débit d'éthylène représentait 100 l/heure, puis on continuait l'injection de butène-1 et d'éthylène avec un débit d'éthylène porté à 200 l/heure et un rapport molaire butène-1:éthylène toujours égal à 0,0466.

Après une durée totale d'injection des oléfines égale à 4 heures, on arrêtait la polymérisation comme indiqué dans les exemples précédents.

On recueillait 1261 g d'un solide hydrocarboné actif pulvérulent, que l'on stockait en boîte à gant sous atmosphère inerte.

Le solide hydrocarboné actif obtenu présentait les caractéristiques suivantes:

| | |
|---|---|
| – Teneur en Ti (p.p.m. poids): | 370 |
| – Teneur en Al (p.p.m. poids): | 889 |
| – Diamètre moyen des particules (microns): | 360 |
| – Densité: | 0,9205 |
| – Masse volumique apparente du produit tassé (g/cm$^3$): | 0,521 |
| – Indice de fusion ($MI^{2,16}_{190\,°C}$): | 20,6 |

Comme il ressort de cet exemple ainsi que de l'exemple 4, l'utilisation d'une composante de métal de transition présentant une faible granulométrie, dans la préparation du solide hydrocarboné actif permet d'augmenter sensiblement la masse volumique apparente dudit solide hydrocarboné actif, ce qui peut par conséquent permettre d'augmenter également la masse volumique apparente des polymères obtenus par la polymérisation d'une ou plusieurs oléfines au moyen dudit solide hydrocarboné actif de masse volumique apparente élevée.

b) Préparation d'un terpolymère éthylène/butène-1/hexène-1:

On opérait comme décrit dans la partie c de l'exemple 11, en utilisant toutefois pour la polymérisation 10,5 g du solide hydrocarboné actif obtenu comme décrit dans la partie a du présent exemple ainsi que 2,2 g de THA pur, et en arrêtant la polymérisation après une durée d'injection des oléfines égale à 4 heures.

On recueillait 1110 g de terpolymère éthylène/butène-1/hexène-1 présentant les caractéristiques suivantes:

| | |
|---|---|
| – Teneur en Ti (p.p.m. poids): | 3,5 |
| – Teneur en Al (p.p.m. poids): | 196 |
| – Diamètre moyen des particules (microns): | 750 |
| – Densité: | 0,921 |
| – Masse volumique apparente du produit tassé (g/cm$^3$): | 0,417 |
| – Indice de fusion ($MI^{2,16}_{190\,°C}$): | 1,25 |

EXEMPLE 13:

a) Préparation du solide hydrocarboné actif:

100 kg de poudre de polyéthylène étaient tamisés par passage à travers un tamis à mailles de 800 microns d'ouverture, chargés dans un réacteur agité et soigneusement séchés par plusieurs purges à l'azote à 85 °C.

Le réacteur étant maintenu à 70 °C et sous une pression d'azote égale à 5 bars, on injectait 2,2 kg de THA pur sur la poudre de polyéthylène agitée, ladite injection étant réalisée en 4 heures, puis on introduisait ensuite dans ledit réacteur, par un sas doseur, 2 kg de la composante à base de TiCl4 définie dans l'exemple 1.

La pression à l'intérieur du réacteur était alors amenée à 12 bars par injection d'azote puis à 13 bars par injection d'hydrogène.

On admettait alors dans le réacteur 25 kg/heure d'éthylène et 3 kg/heure de butène-1 en poursuivant cette injection d'oléfines pendant 8 heures tout en maintenant la température dans ledit réacteur à 70 °C en faisant appel au système de refroidissement par eau à 27 °C équipant le réacteur. Pendant cette opération, la pression dans le réacteur montait très légèrement pour atteindre 15 bars en fin d'essai.

Après une durée d'injection des oléfines égale à 8 heures, ladite injection était interrompue, et, après 30 minutes d'attente, on purgeait la phase gazeuse contenue dans le réacteur par décompression et balayage à l'azote.

On ajoutait alors 4 kg de THA pur au contenu du réacteur maintenu sous agitation, cette injection étant réalisée en 6 heures, puis on vidait le contenu du réacteur à travers un tamis vibrant de 800 microns d'ouverture de maille, maintenu en atmosphère d'azote.

On recueillait, dans un conteneur maintenu sous azote, 250 kg d'un solide hydrocarboné actif et environ 50 kg de particules retenues sur le tamis, qui sont rejetées.

Le solide hydrocarboné actif présentait les caractéristiques suivantes:

| | |
|---|---|
| – Teneur en Ti (p.p.m. poids): | 120 |
| – Teneur en Al (p.p.m. poids): | 1963 |

– Diamètre moyen des particules (microns): 350

Ce solide hydrocarboné actif a été obtenu avec une conversion horaire moyenne de l'éthylène et du butène-1 égale à 694 g par gramme de titane et par heure.

b) Polymérisation d'un mélange d'éthylène et de butène-1 en phase gazeuse et en lit fluidisé au contact du solide hydrocarboné actif avec obtention de LLDPE:

Dans un réacteur à lit fluidisé par une recirculation externe, on introduisait 220 kg d'une poudre de polyéthylène de diamètre moyen de particules égal à 950 microns, préalablement séchés par de nombreuses purges à l'azote, puis on établissait un mélange gazeux réactionnel renfermant, en moles, 10% d'hydrogène, 20% d'azote, 60% d'éthylène et 10% de butène-1 sous une pression relative égale à 20 bars et à une température de 85 °C.

Le réacteur étant agité par la fluidisation, on y introduisait alors de manière semi-continue 660 g/heure du solide hydrocarboné actif obtenu comme indiqué dans la partie a de cet exemple, à raison d'une injection de 66 g toutes les 6 minutes.

Dès la deuxième injection, on observait une tendance à l'échauffement du réacteur indiquant le début de la polymérisation. Le réacteur était alors maintenu à 85 °C par refroidissement du gaz de fluidisation. La pression du réacteur était maintenue à 20 bars relatifs par action sur le débit d'entrée d'éthylène, le débit de butène-1 étant fixé à 8% en poids du débit d'éthylène, tandis que les débits d'azote et d'hydrogène étaient ajustés pour maintenir constantes les concentrations d'azote et d'hydrogène dans le milieu réactionnel, indiquées par un analyseur chromatographique en phase gazeuse à deux colonnes.

La quantité de poudre dans le réacteur, mesurée par un capteur de pression différentielle, était maintenue constante en agissant sur la fréquence d'ouverture d'un sas d'extraction.

Au bout de 5 heures, le réacteur atteignait ainsi un régime quasi permanent, qui était maintenu pendant 120 heures. Sur cette période, on extrayait en moyenne 79 kg/heure de poudre de copolymère éthylène/butène-1 (LLDPE) ayant un diamètre moyen de particules de 1200 microns, une densité, mesurée après recuit de 24 heures, égale à 0,921, et un indice de fusion ($MI\ {}^{2,16}_{190\,°C}$), mesuré sur la poudre, égal à 1,45.

Les analyses de Ti et Al réalisées sur cinq échantillons prélevés régulièrement au cours des 120 heures de marche ont donné les résultats suivants:

| No de l'échantillon | 1 | 2 | 3 | 4 | 5 |
|---|---|---|---|---|---|
| Ti (p.p.m. poids) | 0,7 | 1 | 0,8 | 0,9 | 0,9 |
| Al (p.p.m. poids) | 12 | 14 | 16 | 14 | 16 |

Dans les exemples qui sont présentés ci-dessus pour illustrer l'invention, les pressions en bars sont exprimés, sauf indication contraire, en bars absolus, et les débits en l/heure sont donnés dans les conditions standards de pression et température.

En outre les indices de fusion ont été déterminés d'après la norme ASTM D 1238.

## Revendications

1. Procédé pour la préparation d'un solide hydrocarboné actif utilisable pour polymériser des oléfines, dans lequel on forme une masse catalytique à partir d'une composante d'un métal de transition choisi parmi Ti, V, Zr et Cr, d'un support solide poreux organique ou inorganique sous la forme d'une poudre et d'au moins un composé choisi parmi les composés organométalliques des métaux des groupes I à III du Tableau Périodique des Eléments les quantités de la composante de métal de transition et du composé ou des composés organométalliques étant telles que le rapport du nombre d'atomes du métal ou des métaux desdits groupes I à III du Tableau Périodique au nombre d'atomes de métal de transition soit compris entre 0,1 et 800, puis on polymérise, au contact de ladite masse catalytique, une ou plusieurs oléfines en $C_2$ à $C_{12}$ de manière à produire un solide hydrocarboné actif renfermant une quantité pondérale de métal de transition comprise entre 10 et 50 000 ppm, ladite polymérisation étant réalisée en phase gazeuse à une température inférieure au point de fusion du solide hydrocarboné actif avec maintien d'une conversion horaire de l'oléfine ou des oléfines en $C_2$ à $C_{12}$ inférieure à 500 000 g par gramme de métal de transition, caractérisé en ce que ladite masse catalytique est une masse pulvérulente homogène obtenue en mélangeant intimement la composante de métal de transition, qui se présente sous la forme de particules ayant un diamètre moyen compris entre 0,1 et 500 microns, avec le support solide poreux pulvérulent et une phase liquide renfermant le ou les composés organométalliques des métaux des groupes I et III du Tableau Périodique des Eléments, avec ajustement de la quantité de poudre de support pour que le mélange reste sous forme homogène pulvérulente.

2. Procédé suivant la revendication 1, caractérisé en ce qu'on forme la masse pulvérulente en mélangeant tout d'abord la poudre de support avec la phase liquide renfermant le ou les composés organométalliques, puis en incorporant la composante de métal de transition au mélange résultant.

3. Procédé suivant la revendication 1 ou 2, caractérisé en ce que le diamètre moyen des particules de la composante de métal de transition est compris entre 1 et 250 microns.

4. Procédé suivant l'une des revendications 1 à 3, caractérisé en ce que la composante de métal de transition consiste en un ou plusieurs composés des métaux de transition Ti, V, Zr et Cr.

5. Procédé suivant l'une des revendications 1 à 3, caractérisé en ce que la composante de métal de transition est formée par l'association d'un ou plusieurs composés des métaux de transition Ti, V, Zr et Cr avec un composé de magnésium, et

notamment $MgCl_2$, MgO, $MgCO_3$, MgClOH, phosphate de magnésium, RMgCl, $Mg(OR)_2$ et ClMgOR, R étant un radical alcoyle en Cl à C8, ledit composé de magnésium étant éventuellement associé à $AlCl_3$ ou au produit résultant de la mise en contact d'$AlCl_3$ avec un donneur d'électrons.

6. Procédé suivant la revendication 4 ou 5, caractérisé en ce que la composante de métal de transition inclut encore un adjuvant tel qu'un composé poreux d'oxyde choisi parmi $SiO_2$, $Al_2O_3$, $TiO_2$, $ZrO_2$, zéolithes, oxydes mixtes renfermant $SiO_2$ et un ou plusieurs oxydes métalliques pris parmi $ZrO_2$, $TiO_2$, MgO et $Al_2O_3$, ou tel qu'un produit organique polymérique ou non tel que ceux renfermant du silicium du type siloxane.

7. Procédé suivant l'une des revendications 3 à 6, caractérisé en ce que le ou les composés des métaux de transition Ti, V, Zr et Cr sont choisis parmi $TiCl_4$, $TiCl_3$, VC14, $VOCl_3$, $CrCl_3$, acétylacétonate de vanadium, acétylacétonate de chrome, $Ti(OR)_p Cl_{(4-p)}$ et $Zr(OR)_p Cl_{(4-p)}$, R désignant un radical alcoyle en C1 à C8 et p étant un nombre entier allant de 1 à 4.

8. Procédé suivant l'une des revendications 1 à 7, caractérisé en ce que le support solide poreux organique ou inorganique sous la forme d'une poudre présente un diamètre moyen de particules allant de 1 à 5000 microns et de préférence de 20 à 3000 microns.

9. Procédé suivant l'une des revendications 1 à 8, caractérisé en ce que le support solide poreux sous la forme de poudre est un polymère ou un produit inorganique tel que silice, talc ou magnésie.

10. Procédé suivant l'une des revendications 1 à 8, caractérisé en ce que le support solide poreux sous la forme de poudre est un polymère oléfinique, et consiste tout particulièrement en un homopolymère ou copolymère oléfinique similaire à, ou compatible avec, l'homopolymère ou le copolymère oléfinique à produire par polymérisation d'une ou plusieurs oléfines en présence du solide hydrocarboné actif comme système catalytique.

11. Procédé suivant l'une des revendications 1 à 10, caractérisé en ce que le ou les composés organométalliques des métaux des groupes I à III du Tableau Périodique des Eléments sont choisis parmi l'isoprénylaluminium, les alumoxanes, et les alcoylaluminium de formule $Al(R')_q X_r H_s$, dans laquelle X représente Cl ou un radical monovalent OR', R' désigne un radical alcoyle en C1 à C16, et de préférence en C1 à C12, tandis que q, r et s sont des nombres tels que $1 < q < 3$, $0 < r < 2$ et $0 < s < 2$ avec $q + r + s = 3$, et en particulier parmi ceux desdits composés se présentant à l'état liquide.

12. Procédé suivant l'une des revendications 1 à 10, caractérisé en ce que le ou les composés organométalliques des métaux des groupes I à III du Tableau Périodique des Eléments sont choisis parmi les composés hydrocarbylmagnésium, les composés hydrocarbylzinc, les composés hydrocarbylaluminium, et les mélanges de tels composés.

13. Procédé suivant la revendication 11 ou 12, caractérisé en ce que lesdits composés organométalliques sont choisis parmi les alcoylmagnésium de formule YMgR', les alcoylzinc de formule YZnR', avec dans ces formules Y représentant Cl ou R' et R' désignant un radical alcoyle en C1 à C16, et de préférence en C1 à C12, ou les mélanges d'un alcoylmagnésium de formule YMgR' avec un alcoylaluminium de formule $Al(R')_q X_r H_s$.

14. Procédé suivant l'une des revendications 1 à 13, caractérisé en ce que le rapport du nombre d'atomes du métal ou des métaux des groupes I à III du Tableau Périodique des Eléments au nombre d'atomes de métal de transition de la composante de métal de transition dans la masse pulvérulente est compris entre 0,5 et 200.

15. Procédé suivant l'une des revendications 1 à 14, caractérisé en ce que la polymérisation d'une ou plusieurs oléfines en C2 à C12 au contact de la masse pulvérulente, qui conduit au solide hydrocarboné actif, est réalisée de manière à ce que ledit solide hydrocarboné actif renferme une quantité pondérale de métal de transition issu de la composante de métal de transition compris entre 50 et 15 000 p.p.m.

16. Procédé suivant l'une des revendications 1 à 15, caractérisé en ce que la polymérisation en phase gazeuse de l'oléfine ou des oléfines en C2 à C12 au contact de la masse pulvérulente est mise en œuvre à une température comprise entre $-20\,°C$ et $(T_f - 5)\,°C$, $T_f$ désignant le point de fusion du solide hydrocarboné actif.

17. Procédé suivant l'une des revendications 1 à 16, caractérisé en ce que la conversion horaire de l'oléfine ou des oléfines en C2 à C12 au contact de la masse pulvérulente est maintenue entre 10 et 100 000 g par gramme de métal de transition issu de la composante de métal de transition.

18. Procédé suivant l'une des revendications 1 à 17, caractérisé en ce que l'on polymérise une seule oléfine en C2 à C12 au contact de la masse pulvérulente, ladite oléfine étant choisie en particulier parmi l'éthylène, le propène, le butène-1, l'hexène-1, le méthyl-4 pentène-1 et l'octène-1.

19. Procédé suivant l'une des revendications 1 à 17, caractérisé en ce que l'on polymérise un mélange d'oléfines en C2 à C12 au contact de la masse pulvérulente, en particulier un mélange d'éthylène et d'une ou plusieurs alpha-oléfines en C3 à C12, et notamment un mélange d'éthylène et d'une ou plusieurs alpha-oléfines telles que propène, butène-1, hexène-1, méthyl-4 pentène-1 et octène-1, ou un mélange de propène et d'une ou plusieurs alpha-oléfines en C4 à C12.

20. Procédé suivant l'une des revendications 1 à 17, caractérisé en ce que l'on polymérise un mélange d'éthylène et de butène-1 au contact de la masse pulvérulente, ledit mélange renfermant une proportion molaire de butène-1 allant de 0,1 à 30%.

21. Procédé suivant l'une des revendications 1 à 17, caractérisé en ce que l'on polymérise un mélange d'éthylène, de butène-1 et d'hexène-1 au contact de la masse pulvérulente, ledit mélange

renfermant une proportion molaire globale de butène-1 et d'hexène-1 allant de 0,1 à 30% avec un rapport molaire hexène-1:butène-1 tel que l'hexène-1 reste à l'état de vapeurs dans les conditions de la polymérisation en phase gazeuse.

22. Procédé suivant l'une des revendications 1 à 21, caractérisé en ce que le support solide poreux entrant dans la constitution de la masse pulvérulente est une poudre d'un polyéthylène, d'un polypropylène, ou d'un copolymère d'éthylène avec moins de 20% molaire d'une alpha-oléfine ou de plusieurs alpha-oléfines en C3 à C12 et notamment d'un copolymère d'éthylène avec moins de 20% molaire de butène-1 et/ou d'hexène-1.

23. Procédé suivant l'une des revendications 1 à 22, caractérisé en ce que la polymérisation de l'oléfine ou des oléfines en C2 à C12 au contact de la masse pulvérulente est réalisée en présence d'un agent de transfert de chaînes, et en particulier en présence d'hydrogène ou d'un alcoylzinc.

24. Procédé suivant l'une des revendications 1 à 23, caractérisé en ce que la polymérisation de l'oléfine ou des oléfines en C2 à C12 au contact de la masse pulvérulente est réalisée en discontinu en opérant dans une zone de réaction agitée maintenue à la température appropriée et renfermant ladite masse pulvérulente, et éventuellement de l'hydrogène et/ou une phase gazeuse inerte vis-à-vis de la polymérisation, et en introduisant dans ladite zone une quantité contrôlée de l'oléfine ou des oléfines en C2 à C12 de manière à obtenir un solide hydrocarboné actif renfermant la quantité pondérale appropriée de métal de transition issu de la composante de métal de transition, ladite introduction étant réalisée de manière à maintenir l'oléfine ou les oléfines en phase gazeuse et la température à la valeur choisie et à assurer la conversion horaire convenable de l'oléfine ou des oléfines.

25. Procédé suivant l'une des revendications 1 à 23, caractérisé en ce que la polymérisation de l'oléfine ou des oléfines en C2 à C12 au contact de la masse pulvérulente est réalisée en continu dans une zone de réaction agitée ou fluidisée dans laquelle on introduit un débit de la masse pulvérulente et un débit horaire de l'oléfine ou des oléfines en C2 à C12, on extrait le solide hydrocarboné actif de la zone de réaction de manière à maintenir constante la masse totale de solide à l'intérieur de ladite zone, et l'on maintient la température et la pression totale dans cette zone aux valeurs choisies respectivement par refroidissement de ladite zone et purge de gaz ou ajout de gaz inerte.

26. Procédé suivant l'une des revendications 1 à 25, caractérisé en ce qu'un donneur d'électrons consistant en une base de Lewis est incorporé au solide hydrocarboné actif dans un rapport du nombre d'atomes de métal des groupes I à III du Tableau Périodique qu'il renferme au nombre de molécules de donneur d'électrons compris entre 0,1 et 50 et de préférence entre 1 et 20, ledit donneur d'électrons étant incorporé au solide hydrocarboné actif en un point quelconque du processus d'obtention de ce dernier.

27. Procédé de synthèse d'un polymère ou copolymère oléfinique, dans lequel on polymérise une ou plusieurs oléfines en présence d'un système catalytique formé à partir d'une composante de métal de transition associée à au moins un composé organométallique d'un métal des groupes I à III du Tableau Périodique des Eléments, et notamment à un composé hydrocarbylaluminium et/ou hydrocrbylmagnésium, et éventuellement à un donneur d'électrons, caractérisé en ce que ledit système catalytique consiste en un solide hydrocarboné actif préparé par le procédé suivant l'une des revendications 1 à 26.

28. Procédé suivant la revendication 27, caractérisé en ce que l'on polymérise une monooléfine en C2 à C12 au contact du solide hydrocarboné actif, ladite monooléfine étant en particulier l'éthylène, le propène ou le butène-1.

29. Procédé suivant la revendication 27, caractérisé en ce que l'on polymérise des mélanges d'au moins deux oléfines en C2 à C12 au contact du solide hydrocarboné actif, et en particulier des mélanges d'éthylène et d'une ou plusieurs alpha-oléfines en C3 à C12, ces derniers mélanges, lorsqu'ils sont au contact du solide hydrocarboné actif, renfermant une proportion molaire globale d'alpha-oléfines en C3 à C12 comprise entre 0,1 et 75% et de préférence entre 1 et 50%.

30. Procédé suivant la revendication 27, caractérisé en ce que l'on polymérise des mélanges de propène avec l'éthylène et/ou une ou plusieurs alpha-oléfines en C4 à C12 au contact du solide hydrocarboné actif, lesdits mélanges, lorsqu'ils sont au contact dudit solide hydrocarboné actif, renfermant une proportion molaire globale d'alpha-oléfines en C4 à C12 et/ou d'éthylène comprise entre 0,1 et 75% et de préférence entre 1 et 50%.

31. Procédé suivant la revendication 27, caractérisé en ce que l'on polymérise des mélanges d'éthylène et de propène, avec ou sans autres alpha-oléfines ou dioléfines, dans lesquels, lorsqu'ils sont au contact du solide hydrocarboné actif, le rapport molaire éthylène:propène est compris entre 0,02 et 50 et de préférence entre 0,05 et 1.

32. Procédé suivant l'une des revendications 27 à 31, caractérisé en ce que la polymérisation en présence du solide hydrocarboné actif est mise en œuvre en solution ou en suspension dans un milieu liquide inerte, et notamment dans un hydrocarbure ou dans l'une au moins des oléfines à polymériser maintenue à l'état liquide.

33. Procédé suivant l'une des revendications 27 à 31, caractérisé en ce que la polymérisation en présence du solide hydrocarboné actif est mise en œuvre en phase gazeuse en lit fluidisé et/ou agité.

34. Procédé suivant la revendication 33, caractérisé en ce que l'on polymérise un mélange d'éthylène et d'une ou plusieurs alpha-oléfines en C3 à C12 renfermant, lorsqu'il est au contact du solide hydrocarboné actif, une proportion molaire globale d'alpha-oléfines en C3 à C12 comprise entre 1 et 50% et de préférence entre 1 et 40%.

35. Procédé suivant l'une des revendications 27 à 34, caractérisé en ce que la polymérisation au contact du solide hydrocarboné actif est réalisée en présence d'un agent de transfert de chaînes, et notamment en présence d'hydrogène et/ou d'un alcoylzinc.

36. Procédé suivant l'une des revendications 27 à 35, caractérisé en ce qu'une quantité supplémentaire d'un ou plusieurs composés organométalliques de métaux des groupes I à III du Tableau Périodique des Eléments, similaires ou non à ceux utilisés pour la préparation du solide hydrocarboné actif, est ajoutée au milieu de polymérisation de l'oléfine ou des oléfines en présence dudit solide hydrocarboné actif pour ajuster le rapport du nombre d'atomes de métal ou de métaux des groupes I à III du Tableau Périodique des Eléments au nombre d'atomes de métal de transition, issu de la composante de métal de transition, à la valeur choisie pour la polymérisation.

37. Procédé suivant l'une des revendications 27 à 36, caractérisé en ce que le solide hydrocarboné actif ne renfermant pas de donneur d'électrons, on ajoute ce dernier au milieu de polymérisation de l'oléfine ou des oléfines en présence du solide hydrocarboné actif.

38. Procédé suivant la revendication 36, caractérisé en ce, que le solide hydrocarboné actif ne renfermant pas de donneur d'électrons, on ajoute ce dernier au milieu de polymérisation en mélange avec la quantité supplémentaire du ou des composés organométalliques.

39. Procédé suivant l'une des revendications 36 à 38, caractérisé en ce que la quantité supplémentaire du ou des composés organométalliques ou/et le donneur d'électrons sont ajoutés au solide hydrocarboné actif après la préparation de ce dernier mais avant de l'engager en polymérisation de l'oléfine ou des oléfines.

40. Procédé suivant la revendication 39, caractérisé en ce que le solide hydrocarboné actif renfermant ladite quantité supplémentaire du ou des composés organométalliques est utilisé comme composant catalytique unique pour la polymérisation de l'oléfine ou des oléfines en phase gazeuse.

**Claims**

1. Process for the preparation of an active hydrocarbon solid usable for polymerizing olefins, wherein a catalytic mass is formed from a component of a transition metal selected from Ti, V, Zr and Cr, a porous organic or inorganic solid support in powder form, and at least one compound selected from the organometallic compounds of metals in groups I to III of the Periodic Table of Elements, the amounts of the transition metal components and of the organometallic compound(s) being such that the ratio of the number of atoms of the metal(s) of said groups I to III of the Periodic Table to the number of atoms of the transition metal is comprised between 0.1 and 800, then the polymerization is performed, in contact with said catalytic mass, of one or more $C_2$ to $C_{12}$ olefins so as to produce an active hydrocarbon solid containing an amount by weight of the transition metal comprised between 10 and 50,000 ppm, said polymerization being performed in the gas phase at a temperature below the melting point of the active hydrocarbon solid, maintaining an hourly rate of conversion of the $C_2$ to $C_{12}$ olefin(s) below 500,000 g per gramme of transition metal, characterized in that said catalytic mass is a homogeneous powdery mass obtained by intimately mixing the transition metal component, which occurs in the form of particles having an average diameter comprised between 0.1 and 500 microns, with the powdery porous solid support and a liquid phase containing the organometallic compound(s) or the metals of groups I to III of the Periodic Table of Elements, with adjustment of the amount of support powder so that the mixture remains in homogeneous powdery form.

2. Process according to Claim 1, characterized in that the powdery mass is formed by mixing first of all the support powder with the liquid phase containing the organometallic compound(s), then incorporating the transition metal component to the resulting mixture.

3. Process according to Claim 1 or 2, characterized in that the mean diameter of the particles of the transition metal component is comprised between 1 and 250 microns.

4. Process according to one of Claims 1 to 3, characterized in that the transition metal component consists of one or more compounds of the transition metals Ti, V, Zr and Cr.

5. Process according to one of Claims 1 to 3, characterized in that the transition metal component is formed by the association of one or more compounds of the transition metals Ti, V, Zr and Cr with a magnesium compound, and particularly $MgCl_2$, MgO, $MgCO_3$, MgClOH, magnesium phosphate, RMgCl, $Mg(OR)_2$ and ClMgOR, R being a $C_1$ to $C_8$ alkyl radical, said magnesium compound being optionally associated with $AlCl_3$ or with the product resulting from contacting $AlCl_3$ with an electron donor.

6. Process according to Claim 4 or 5, characterized in that the transition metal component further includes an adjuvant such as a porous oxide compound selected from $SiO_2$, $Al_2O_3$, $TiO_2$, $ZrO_2$, zeolites, mixed oxides containing $SiO_2$, and one or more metal oxides taken from $ZrO_2$, $TiO_2$, MgO and $Al_2O_3$, or such as a polymeric or non polymeric organic product such as those containing silicon of siloxane type.

7. Process according to one of Claims 3 to 6, characterized in that the transition metal compound(s) Ti, V, Zr and Cr are chosen from $TiCl_4$, $TiCl_3$, $VCl_4$, $CrCl_3$, vanadium acetyl-acetonate, chromium acetyl-acetonate, $Ti(OR)_p\ Cl_{(4-p)}$ and $Zr(OR)_p\ Cl_{(4-p)}$, R denoting a $C_1$ to $C_8$ alkyl radical and p being an integer from 1 to 4.

8. Process according to one of Claims 1 to 7, characterized in that the organic or inorganic porous solid support in powder form has a mean

particle diameter ranging from 1 to 5000 microns and preferably from 20 to 3000 microns.

9. Process according to one of Claims 1 to 8, characterized in that the porous solid support in powder form is a polymer or an inorganic product such as silicon, talcum or magnesium.

10. Process according to one of Claims 1 to 8, characterized in that the porous solid support in powder form is an olefinic polymer, and consists particularly of an olefinic homopolymer or copolymer similar to, or compatible with, the olefinic homopolymer or copolymer to be produced by polymerization of one or more olefins in the presense of the active hydrocarbon solid as catalytic system.

11. Process according to one of Claims 1 to 10, characterized in that the organometallic compound(s) of the metals of groups I to III of the Periodic Table of Elements are chosen from isoprenyl aluminium, alumoxanes, and alkoyl aluminium compounds of formula $Al(R')_q X_r H_s$, wherein X represents Cl or a monovalent OR' radical, R' denoting a $C_1$ to $C_{16}$ alkyl radical and preferably a $C_1$ to $C_{12}$ alkyl radical, and q, r and s are numbers such that $1<q<3$, $0<r<2$ and $0<s<2$ with $q+r+s = 3$, those of said compounds which occur in the liquid state being particularly preferred.

12. Process according to one of Claims 1 to 10, characterized in that the organometallic compound(s) of the metals in groups I to III of the Periodic Table of Elements are chosen from hydro-carbyl-magnesium compounds, hydro-carbyl-zinc compounds, hydro-carbyl-aluminium compounds and mixtures of said compounds.

13. Process according to Claim 11 or 12, characterized in that said organometallic compounds are chosen from alkyl magnesiums of formula YMgRl, alkyl zincs of formula YZnR', with, in said formulae, Y representing Cl or R' and R' denoting a $C_1$ to $C_{16}$ alkyl radical, and preferably a $C_1$ to $C_{12}$ alkyl radical, or the mixtures of an alkyl magnesium of formula YMgR' with an alkyl aluminium of formula $Al\ (R')_q\ X_r\ H_s$.

14. Process according to one of Claims 1 to 13, characterized in that the ratio of the number of atoms of the metal(s) of groups I to III of the Periodic Table of Elements to the number of atoms of the transition metal of the transition metal component in the powdery mass is comprised between 0.5 and 200.

15. Process according to one of Claims 1 to 14, characterized in that the polymerization of one or more $C_2$ to $C_{12}$ olefins in contact with the powdery mass, which leads to the active hydrocarbon solid is performed in such a manner that said active hydrocarbon solid contains a weight mass of transition metal originating from the transition metal component comprised within 50 and 15,000 p.p.m.

16. Process according to one of Claims 1 to 15, characterized in that the gas phase polymerization of the $C_2$ to $C_{12}$ olefin or olefins in contact with the powdery mass is carried out at a temperature comprised between $-20$°C and ($T_f$ $-5$) °C, $T_f$ denoting the melting point of the active hydrocarbon solid.

17. Process according to one of Claims 1 to 16, characterized in that the hourly conversion rate of the $C_2$ to $C_{12}$ olefin or olefins in contact with the powdery mass is held between 10 and 100,000 g per gramme of transition metal originating from the transition metal component.

18. Process according to one of Clamis 1 to 17, characterized in that one $C_2$ to $C_{12}$ olefin only is polymerized in contact with the powdery mass, said olefin being selected in particular from ethylene, propene, butene-1, hexene-1, methyl-4, pentene-1 and octene-1.

19. Process according to one of Claims 1 to 12, characterized in that a mixture of $C_2$ to $C_{12}$ olefins is polymerized in contact with the powdery mass, in particular a mixture of ethylene and of one or more $C_3$ to $C_{12}$, alpha-olefins, and particularly a mixture of ethylene and one or more alpha-olefins such as propene, butene-1, hexene-1, methyl-4 pentene-1 and octene-1, or a mixture of propene and of one or more $C_4$ to $C_{12}$ alpha-olefins.

20. Process according to one of Claims 1 to 17, characterized in that a mixture of ethylene and butene-1 is polymerized in contact with the powdery mass, said mixture containing a molar proportion of butene-1 ranging from 0.1 to 30%.

21. Process according to one of Claims 1 to 17, characterized in that a mixture of ethylene, butene-1 and hexene-1 is polymerized in contact with the powdery mass, said mixture containing an overall molar proportion of butene-1 and hexene-1 ranging from 0.1 to 30% with a molar ratio hexene-1:butene-1 such that hexene-1 remains in the vapour state under the conditions of gas phase polymerization.

22. Process according to one of Claims 1 to 21, characterized in that the porous solid support entering into the constitution of the powdery mass is a powder of a polyethylene, a polypropylene, or an ethylene copolymer with less than 20% molar of one or more $C_3$ to $C_{12}$ alpha-olefins and particularly of an ethylene copolymer with less than 20% molar of butene-1 and/or hexene-1.

23. Process according to one of Claims 1 to 22, characterized in that the polymerization of the $C_2$ to $C_{12}$ olefin(s) in contact with the powdery mass is performed in the presence of a chain transfer agent, and particularly in the presence of hydrogen or an alkyl-zinc.

24. Process according to one of Claims 1 to 23, characterized in that the polymerization of the $C_2$ to $C_{12}$ olefin(s) in contact with the powdery mass is performed discontinuously, operating in a stirred reaction zone kept at suitable temperature and containing said powdery mass, and possibly hydrogen and/or a gas phase inert as regards polymerization, and introducing into said zone a controlled quantity of the $C_2$ to $C_{12}$ olefin(s) so as to obtain an active hydrocarbon solid containing the suitable quantity by weight of transition metal originating from the transition metal component, said introduction being performed in such a way as to maintain the olefin or olefins in the gas phase

and the temperature at the chosen value and to ensure a suitable hourly rate of conversion of the olefin or olefins.

25. Process according to one of Claims 1 to 23, characterized in that the polymerization of the $C_2$ to $C_{12}$ olefin(s) in contact with the powdery mass is performed continuously in a stirred or fluidized reaction zone into which one introduces a flow of powdery mass and an hourly rate of flow of the $C_2$ to $C_{12}$, olefin or olefins, the active hydrocarbonated solid is extracted from the reaction zone so as to maintain constant the total mass of solid inside said zone, and the temperature and the total pressure in said zone are maintained at the chosen values respectively by cooling said zone and venting of gas or addition of inert gas.

26. Process according to one of Claims 1 to 25, characterized in that an electron donor consisting of a Lewis base is incorporated into the active hydrocarbon solid in a ratio of the number of atoms of metals in groups I to III of the Periodic Table it contains to the number of molecules of electron donor comprised between 0.1 and 50 and preferably between 1 and 20, said electron donor being incorporated into the active hydrocarbon solid at any point of the process of obtaining the latter.

27. A process of synthesis of an olefinic polymer or copolymer in which one or more olefins are polymerized in the presence of a catalytic system formed from a transition metal compoud associated with at least one organometallic compound of a metal in groups I to III of the Periodic Table of Elements, and particularly with a hydro-carbyl-aluminium and/or hydro-carbyl-magnesium compound, and possibly to an electron characterized in that said catalytic system consists in an active hydrocarbon solid prepared by the process according to one of Claims 1 to 26.

28. Process according to Claim 27, characterized in that a $C_2$ to $C_{12}$ mono-olefin is polymerized in contact with the active hydrocarbon solid, said mono-olefin being in particular ethylene, propene or butene-1.

29. Process according to Claim 27, characterized in that mixtures of at least two $C_2$ to $C_{12}$ olefins are polymerized in contact with the active hydrocarbonated solid, and in particular mixtures of ethylene and one or more alpha $C_3$ to $C_{12}$ olefins, the latter mixtures, when in contact with the active hydrocarbon solid, containing an overall molar proportion of $C_3$ to $C_{12}$ alpha-olefins comprised between 0.1 and 75% and preferably between 1 and 50%.

30. Process according to Claim 27, characterized in that the mixtures of propene with ethylene and/or one or more $C_4$ to $C_{12}$ alpha-olefins are polymerized in contact with the active hydrocarbon solid, said mixtures, when in contact with said active hydrocarbon solid containing an overall molar proportion of $C_4$ to $C_{12}$ alpha-olefins and/or ethylene comprised between 0.1 and 75% and preferably between 1 and 50%.

31. Process according to Claim 27, characterized in that mixtures of ethylene and propene are polymerized with or without other alpha-olefins or diolefins, wherein, when they are in contact with the active hydrocarbon solid, the ethylene:propene molar ratio is comprised between 0.02 and 50 and preferably betwen 0.05 and 1.

32. Process according to one of Claims 27 to 31, characterized in that the polymerization in the presence of the active hydrocarbon solid is carried out in solution or in suspension in an inert liquid medium, and particularly in a hydrocarbon or in one at least of the olefins to the polymerized kept in the liquid condition.

33. Process according to one of Claims 27 to 31, characterized in that the polymerization in the presence of the active hydrocarbon solid is carried out in the gas phase in a fluidized and/or stirred bed.

34. Process according to Claim 33, characterized in that one polymerizes a mixture of ethylene and one or more $C_3$ to $C_{12}$ alpha-olefins containing, when it is in contact with the active hydrocarbon solid, an overall molar proportion of $C_3$ to $C_{12}$ alpha-olefins comprised between 1 and 50% and preferably between 1 and 40%.

35. Process according to one of Claims 27 to 34, characterized in that the polymerization in contact with the active hydrocarbon solid is carried out in the presence of a chain transfer agent, and particularly in the presence of hydrogen and/or an alkyl zinc.

36. Process according to one of Claims 27 to 35, characterized in that an additional amount of one or more organometallic compounds of metals of groups I to III of the Periodic Table of Elements, similar or not to those used for the preparation of the active hydrocarbon solid, is added to the olefin or olefins polymerization medium in the presence of said active hydrocarbon solid to adjust the ratio of the number of atoms of metal(s) of groups I to III of the Periodic Table of Elements to the number of atoms of transition metal originating from the transition metal component, at the value chosen for polymerization.

37. Process according to one of Claims 27 to 36, characterized in that the active hydrocarbon solid does not contain an electron donor, and said donor is added to the polymerization medium in the presence of the active hydrocarbon solid.

38. Process according to Claim 36, characterized in that the active hydrocarbon solid does not contain an electron donor and said donor is added to the polymerization medium in a mixture with the additional amount of the organometallic compound(s).

39. Process according to one of Claims 36 to 38, characterized in that the additional amount of the organometallic compound(s) and/or the electron donor are added to the active hydrocarbon solid after the preparation of the latter but before it is used for the polymerization of the olefin or olefins.

40. Process according to Claim 39, characterized in that the active hydrocarbon solid containing said additional amount of the organometallic compound(s) is used as sole catalytic component

for the polymerization of the olefin or olefins in the gas phase.

**Patentansprüche**

1. Verfahren zur Herstellung eines festen aktiven Kohlenwasserstoffs verwendbar für das Polymerisieren von Olefinen, bei dem man eine katalytische Masse bildet ausgehend von einer Übergangsmetall-Komponente ausgewählt aus Ti, V, Zr und Cr, einem festen porösen organischen oder anorganischen Träger in Form eines Pulvers und wenigstens einer Verbindung ausgewählt aus den organometallischen Verbindungen der Metalle der Gruppen I bis III des Periodensystems, wobei die Mengen der Übergangsmetall-Komponente und der organometallischen Verbindung oder Verbindungen so gewählt sind, dass das Verhältnis der Anzahl der Atome des Metalls oder der Metalle der Gruppen I bis III des Periodensystems zur Anzahl der Atome des Übergangsmetalls zwischen 0,1 und 800 liegt, und man anschliessend in Kontakt mit dieser katalytischen Masse ein oder mehrere Olefine mit $C_2$ bis $C_{12}$ polymerisiert, in der Weise, dass man einen festen aktiven Kohlenwasserstoff erhält, der eine Gewichtsmenge des Übergangsmetalls zwischen 10 und 500 000 ppm enthält, wobei diese Polymerisation in der Gasphase bei einer Temperatur unterhalb des Schmelzpunkts des aktiven festen Kohlenwasserstoffs durchgeführt wird unter Aufrechterhaltung eines stündlichen Umsatzes des Olefins oder der Olefine mit $C_2$ bis $C_{12}$ von weniger als 500 000 g/Gramm des Übergangsmetalls, dadurch gekennzeichnet, dass diese katalytische Masse eine pulverförmige homogene Masse ist, die erhalten wird durch inniges Mischen der Übergangsmetall-Komponente, die in Form von Partikeln mit einem mittleren Durchmesser von zwischen 0,1 und 500 Mikron vorliegt, mit dem festen porösen pulverförmigen Träger und einer flüssigen Phase enthaltend die organometallische Verbindung oder die organometallischen Verbindungen der Metalle der Gruppen I bis III des Periodensystems, unter Einstellung der Menge des Trägerpulvers, so dass das Gemisch in homogener pulverförmiger Form verbleibt.

2. Verfahren nach Anspruch 1, dadurch gekennzeichnet, dass man die pulverförmige Masse bildet indem man zunächst das Trägerpulver mit der flüssigen Phase enthaltend die organometallische Verbindung oder die organometallischen Verbindungen mischt und dann in das resultierende Gemisch die Übergangsmetall-Komponente einarbeitet.

3. Verfahren nach Anspruch 1 oder 2, dadurch gekennzeichnet, dass der mittlere Durchmesser der Partikel der Komponente des Übergangsmetalls zwischen 1 und 250 Mikron beträgt.

4. Verfahren nach einem der Ansprüche 1 bis 3, dadurch gekennzeichnet, dass die Übergangsmetall-Komponente aus einer oder mehrerer Verbindungen der Übergangsmetalle Ti, V, Zr und Cr besteht.

5. Verfahren nach einem der Ansprüche 1 bis 3, dadurch gekennzeichnet, dass die Übergangsmetall-Komponente durch Vereinigung einer oder mehrerer Verbindungen der Übergangsmetalle Ti, V, Zr und Cr mit einer Magnesiumverbindung gebildet wird, insbesondere $MgCl_2$, MgO, $MgCO_3$, MgClOH, Magnesiumphosphat, RMgCl, $Mg(OR)_2$ und ClMgOR, wobei R ein Alkoylrest mit $C_1$ bis $C_8$ ist, wobei die Magnesiumverbindung gegebenenfalls zu $AlCl_3$ zugegeben wird oder zu dem Produkt erhältlich durch das in Kontakt bringen von $AlCl_3$ mit einem Elektronendonor.

6. Verfahren nach den Ansprüchen 4 oder 5, dadurch gekennzeichnet, dass die Übergangsmetall-Komponente noch einen Hilfsstoff enthält wie z.B. eine poröse Oxidverbindung ausgewählt aus $SiO_2$, $Al_2O_3$, $TiO_2$, $ZrO_2$, den Zeolithen, gemischten Oxiden enthaltend $SiO_2$ oder einem oder mehreren Metalloxiden ausgewählt aus $ZrO_2$, $TiO_2$, MgO und $Al_2O_3$ oder ein organisches polymeres oder nicht polymeres Produkt wie solche, die Silizium vom Typ Siloxan enthalten.

7. Verfahren nach einem der Ansprüche 3 bis 6, dadurch gekennzeichnet, dass die Verbindung(en) der Übergangsmetalle Ti, V, Zr und Cr ausgewählt werden aus $TiCl_4$, $TiCl_3$, $VCl_4$, $VOCl_3$, $CrCl_3$, Vanadiumacetylacetonat, Chromacetylacetonat, $Ti(OR)_p\ Cl_{(4-p)}$ und $Zr(OR)_p\ Cl_{(4-p)}$, worin R einen Alkoylrest mit $C_1$ bis $C_8$ bezeichnet und p eine ganze Zahl von 1 bis 4 ist.

8. Verfahren nach einem der Ansprüche 1 bis 7, dadurch gekennzeichnet, dass der feste poröse organische oder anorganische Träger in Pulverform einen mittleren Partikeldurchmesser von 1 bis 5000 Mikron, vorzugsweise von 20 bis 3000 Mikron aufweist.

9. Verfahren nach einem der Ansprüche 1 bis 8, dadurch gekennzeichnet, dass der feste poröse Träger in Pulverform ein Polymer ist oder ein anorganisches Produkt so wie Siliziumdioxid, Talk oder Magnesia.

10. Verfahren nach einem der Ansprüche 1 bis 8, dadurch gekennzeichnet, dass der feste poröse Träger in Pulverform ein olefinisches Polymer ist und insbesondere aus einem olefinischen Homopolymer oder Copolymer besteht, das dem olefinischen Homopolymer oder Copolymer ähnlich ist, das herzustellen ist durch Polymerisation eines oder mehrerer Olefine in Gegenwart des festen aktiven Kohlenwasserstoffs als katalytisches System, oder mit diesem kompatibel ist.

11. Verfahren nach einem der Ansprüche 1 bis 10, dadurch gekennzeichnet, dass die organometallische Verbindung oder die organometallischen Verbindungen der Metalle der Gruppen 1 bis 3 des Periodensystems ausgewählt werden aus Isoprenylaluminium, den Alumoxanen, den Aluminiumalkoylen der Formel $Al(R')_q\ X_r\ H_s$, in der X Chlor darstellt oder einen monovalenten Rest OR′, wobei R′ einen Alkoylrest mit $C_1$ bis $C_{16}$ bezeichnet, vorzugsweise mit $C_1$ bis $C_{12}$, während q, r und s Zahlen sind, die so gewählt werden, dass gilt $1<q<3$, $0<r<2$ und $0<s<2$ mit $q+r+s = 3$, und insbesondere aus denjenigen dieser Verbindungen, die im flüssigen Zustand vorliegen.

12. Verfahren nach einem der Ansprüche 1 bis 10, dadurch gekennzeichnet, dass die organometallische Verbindung oder die organometallischen Verbindungen der Metalle der Gruppen I bis III des Periodensystems ausgewählt werden aus den Magnesiumkohlenwasserstoffverbindungen, den Zinkkohlenwasserstoffverbindungen, den Aluminiumkohlenwasserstoffverbindungen und den Gemischen dieser Verbindungen.

13. Verfahren nach Anspruch 11 oder 12, dadurch gekennzeichnet, dass die genannten organometallischen Verbindungen ausgewählt werden aus den Alkoylmagnesiumverbindungen der Fomel YMgR', den Alkoylzinkverbindungen der Formel YZnR', wobei in diesen Formeln Y Cl oder R' darstellt und R' ein Alkoylrest bezeichnet mit $C_1$ bis $C_{16}$, vorzugsweise mit $C_1$ bis $C_{12}$, oder den Gemischen einer Alkoylmagnesiumverbindung der Formel YMgR' mit einer Alkoylaluminiumverbindung der Formel $Al(R')_q X_r H_s$.

14. Verfahren nach einem der Ansprüche 1 bis 13, dadurch gekennzeichnet, dass das Verhältnis der Anzahl der Atome des Metalls oder der Metalle der Gruppen I bis III des Periodensystems zur Anzahl der Atome des Übergangsmetalls der Übergangsmetall-Komponente in der pulverförmigen Masse zwischen 0,5 und 200 beträgt.

15. Verfahren nach einem der Ansprüche 1 bis 14, dadurch gekennzeichnet, dass die Polymerisation eines oder mehrerer Olefine mit $C_2$ bis $C_{12}$ im Kontakt mit der pulverförmigen Masse, die zu dem festen aktiven Kohlenwasserstoff führt, in der Weise durchgeführt wird, dass dieser aktive feste Kohlenwasserstoff eine Gewichtsmenge des Übergangsmetalls, das aus der Übergangsmetall-Komponente hervorgegangen ist, zwischen 50 und 15 000 ppm enthält.

16. Verfahren nach einem der Ansprüche 1 bis 15, dadurch gekennzeichnet, dass die Polymerisation des Olefins oder der Olefine mit $C_2$ bis $C_{12}$ in der Gasphase im Kontakt mit der pulverförmigen Masse bei einer Temperatur zwischen $-20\,°C$ und $(T_f -5)\,°C$ durchgeführt wird, wobei $T_f$ den Schmelzpunkt des aktiven festen Kohlenwasserstoffs bezeichnet.

17. Verfahren nach einem der Ansprüche 1 bis 16, dadurch gekennzeichnet, dass der stündliche Umsatz des Olefins oder der Olefine mit $C_2$ bis $C_{12}$ im Kontakt mit der pulverförmigen Masse aufrecht erhalten wird bei 10 bis 100 000 g/Gramm des Übergangsmetalls, das aus der Übergangsmetall-Komponente hervorgegangen ist.

18. Verfahren nach einem der Ansprüche 1 bis 17, dadurch gekennzeichnet, dass man ein einziges Olefin mit $C_2$ bis $C_{12}$ im Kontakt mit der pulverförmigen Masse polymerisiert, wobei dieses Olefin insbesondere ausgewählt wird aus Ethylen, Propen, 1-Buten, 1-Hexen, 4-Methyl-1-penten und 1-Octen.

19. Verfahren nach einem der Ansprüche 1 bis 17, dadurch gekennzeichnet, dass man ein Gemisch von Olefinen mit $C_2$ bis $C_{12}$ im Kontakt mit der pulverförmigen Masse polymerisiert, insbesondere ein Gemisch von Ethylen und einem oder mehreren alpha-Olefinen mit $C_3$ bis $C_{12}$, insbesondere ein Gemisch von Ethylen und einem oder mehreren alpha-Olefinen wie z.B. Propen, 1-Buten, 1-Hexen, 4-Methyl-1-penten und 1-Octen oder ein Gemisch von Propen und einem oder mehreren alpha-Olefinen mit $C_4$ bis $C_{12}$.

20. Verfahren nach einem der Ansprüche 1 bis 17, dadurch gekennzeichnet, dass man ein Gemisch von Ethylen und 1-Buten in Kontakt mit der pulverförmigen Masse polymerisiert, wobei dieses Gemisch einen molaren Anteil von 1-Buten zwischen 0,1 und 30% aufweist.

21. Verfahren nach einem der Ansprüche 1 bis 17, dadurch gekennzeichnet, dass man ein Gemisch von Ethylen, 1-Buten und 1-Hexen in Kontakt mit der pulverförmigen Masse polymerisiert, wobei dieses Gemisch einen ungefähren molaren Anteil von 1-Buten und 1-Hexen von 0,1 bis 30% aufweist mit einem molaren Verhältnis von 1-Hexen:1-Buten, das so gewählt ist, dass 1-Hexen unter den Bedingungen der Polymerisation in der Gasphase im Dampfzustand verbleibt.

22. Verfahren nach einem der Ansprüche 1 bis 21, dadurch gekennzeichnet, dass der feste poröse Träger, der in den Zustand der pulverförmigen Masse übergeht, ein Pulver eines Polyethylens, eines Polypropylens oder eines ethylenischen Copolymeren mit mindestens 20 Mol-% eines alpha-Olefins oder mehrerer alpha-Olefine mit $C_3$ bis $C_{12}$ ist, insbesondere eines ethylenischen Copolymers mit wenigstens 20 Mol-% 1-Buten und/oder 1-Hexen.

23. Verfahren nach einem der Ansprüche 1 bis 22, dadurch gekennzeichnet, dass die Polymerisation des Olefins oder der Olefine mit $C_2$ bis $C_{12}$ im Kontakt mit der pulverförmigen Masse in Gegenwart eines Kettenübertragungsagens, insbesondere in Gegenwart von Wasserstoff oder einem Alkoylzink durchgeführt wird.

24. Verfahren nach einem der Ansprüche 1 bis 23, dadurch gekennzeichnet, dass die Polymerisation des Olefins oder der Olefine mit $C_2$ bis $C_{12}$ in Kontakt mit der pulverförmigen Masse diskontinuierlich durchgeführt wird, indem man in einer gerührten Reaktionszone arbeitet, die bei einer geeigneten Temperatur gehalten wird und die pulverförmige Masse enthält, und eventuell Wasserstoff und/oder eine gasförmige Phase, die gegenüber der Polymerisation inert ist, und wobei man in diese Zone eine kontrollierte Menge des Olefins oder der Olefine mit $C_2$ bis $C_{12}$ in der Weise einführt, dass man einen aktiven festen Kohlenwasserstoff enthält, der eine geeignete Gewichtsmenge des Übergangsmetalls enthält, das aus der Übergangsmetall-Komponente hervorgegangen ist, wobei dieses Einführen derart durchgeführt wird, dass das Olefin oder die Olefine in der gasförmigen Phase gehalten werden und die Temperatur auf dem gewählten Wert gehalten wird und so, dass ein geeigneter stündlicher Umsatz des Olefins oder der Olefine gewährleistet ist.

25. Verfahren nach einem der Ansprüche 1 bis 23, dadurch gekennzeichnet, dass die Polymerisation des Olefins oder der Olefine mit $C_2$ bis $C_{12}$ im Kontakt mit der pulverförmigen Masse kontinuierlich durchgeführt wird in einer gerührten Reaktionszone oder einer Wirbelschichtzone in der man einen Durchsatz an pulverförmiger Masse und einen stündlichen Durchsatz an Olefin oder an den Olefinen mit $C_2$ bis $C_{12}$ aufrecht erhält, man den festen aktiven Kohlenwasserstoff aus der Reaktionszone in solcher Weise extrahiert, dass eine konstante Gesamtmasse an Feststoff im Inneren dieser Zone aufrecht erhalten wird und man die Temperatur und den Gesamtdruck in dieser Zone jeweils durch Abkühlung dieser Zone und Reinigung des Gases oder Zufuhr an Inertgas auf den gewünschten Werten hält.

26. Verfahren nach einem der Ansprüche 1 bis 25, dadurch gekennzeichnet, dass ein Elektronendonor bestehend aus einer Lewis-Base in den festen aktiven Kohlenwasserstoff eingearbeitet wird in einem Verhältnis der Anzahl der Atome des Metalls der Gruppen I bis III des Periodensystems, die dieser enthält, zur Anzahl der Moleküle des Elektronendonors zwischen 0,1 und 50 und vorzugsweise zwischen 1 und 20, wobei dieser Elektronendonor in den festen aktiven Kohlenwasserstoff zu einem beliebigen Zeitpunkt des Herstellungsverfahrens des letzteren eingearbeitet wird.

27. Verfahren zur Herstellung eines olefinischen Polymeren oder Copolymeren, bei dem man ein oder mehrere Olefine in Gegenwart eines katalytischen Systems polymerisiert, das gebildet wird aus einer Übergangsmetall-Komponente in Verbindung mit wenigstens einer organometallischen Verbindung eines Metalls der Gruppen I bis III des Periodensystems, insbesondere einer Aluminiumkohlenwasserstoffverbindung und/oder Magnesiumkohlenwasserstoffverbindung, und gegebenenfalls einem Elektronendonor, dadurch gekennzeichnet, dass dieses katalytische System aus einem aktiven festen Kohlenwasserstoff besteht, der in einem Verfahren gemäss einem der Ansprüche 1 bis 26 hergestellt wurde.

28. Verfahren nach Anspruch 27, dadurch gekennzeichnet, dass man ein Monoolefin mit $C_2$ bis $C_{12}$ in Kontakt mit dem aktiven festen Kohlenwasserstoff polymerisiert, wobei dieses Monoolefin insbesondere Ethylen, Propen oder 1-Buten ist.

29. Verfahren nach Anspruch 27, dadurch gekennzeichnet, dass man Gemische von wenigstens 2 Olefinen mit $C_2$ bis $C_{12}$ in Kontakt mit dem aktiven festen Kohlenwasserstoff polymerisiert, insbesondere Gemische aus Ethylen und einem oder mehreren alpha-Olefinen mit $C_3$ bis $C_{12}$, wobei die letzteren Gemische wenn sie sich im Kontakt mit dem aktiven festen Kohlenwasserstoff befinden einen ungefähren molaren Anteil an alpha-Olefinen mit $C_3$ bis $C_{12}$ von zwischen 0,1 und 75%, vorzugsweise zwischen 1 und 50% aufweisen.

30. Verfahren nach Anspruch 27, dadurch gekennzeichnet, dass man Gemische von Propen mit Ethylen und/oder einem oder mehreren alpha-Olefinen mit $C_4$ bis $C_{12}$ in Kontakt mit dem festen aktiven Kohlenwasserstoff polymerisiert, wobei diese Gemische wenn sie in Kontakt mit diesem aktiven festen Kohlenwasserstoff stehen einen ungefähren molaren Anteil an alpha-Olefinen mit $C_4$ bis $C_{12}$ und/oder Ethylen von zwischen 0,1 und 75% und vorzugsweise zwischen 1 und 50% aufweisen.

31. Verfahren nach Anspruch 27, dadurch gekennzeichnet, dass man Gemische von Ethylen und Propen polymerisiert mit oder ohne andere alpha-Olefine oder Diolefine, in denen, wenn sie in Kontakt mit dem aktiven festen Kohlenwasserstoff stehen das molare Verhältnis Ethylen:Propen zwischen 0,02 und 50, vorzugsweise zwischen 0,05 und 1 liegt.

32. Verfahren nach einem der Ansprüche 27 bis 31, dadurch gekennzeichnet, dass die Polymerisation in Gegenwart des festen aktiven Kohlenwasserstoffs in Lösung oder in einer Suspension in einem inerten flüssigen Milieu durchgeführt wird, insbesondere in einem Kohlenwasserstoff oder in wenigstens einem der zu polymerisierenden Olefine, die im flüssigen Aggregatzustand gehalten werden.

33. Verfahren nach einem der Ansprüche 27 bis 31, dadurch gekennzeichnet, dass die Polymerisation in Gegenwart des festen aktiven Kohlenwasserstoffs in der Gasphase in einer Wirbelschicht und/oder gerührten Schicht durchgeführt wird.

34. Verfahren nach Anspruch 33, dadurch gekennzeichnet, dass man ein Gemisch von Ethylen und einem oder mehreren alpha-Olefinen mit $C_3$ bis $C_{12}$ polymerisiert, das wenn es sich in Kontakt mit dem festen aktiven Kohlenwasserstoff befindet einen ungefähren molaren Anteil an alpha-Olefinen mit $C_3$ bis $C_{12}$ zwischen 1 und 50%, vorzugsweise zwischen 1 und 40% aufweist.

35. Verfahren nach einem der Ansprüche 27 bis 34, dadurch gekennzeichnet, dass die Polymerisation in Kontakt mit dem festen aktiven Kohlenwasserstoff durchgeführt wird in Gegenwart eines Kettenübertragungsagens, insbesondere in Gegenwart von Wasserstoff und/oder einem Alkoylzink.

36. Verfahren nach einem der Ansprüche 27 bis 35, dadurch gekennzeichnet, dass eine zusätzliche Menge eines oder mehrerer organometallischer Verbindungen der Metalle der Gruppen I bis III des Periodensystems der Elemente zugegeben wird, die gegebenenfalls denjenigen ähnlich sind, die für die Herstellung des festen aktiven Kohlenwasserstoffs verwendet werden, wobei die Zugabe zum Milieu der Polymerisation des Olefins oder der Olefine in Gegenwart dieses aktiven festen Kohlenwasserstoffs erfolgt um das Verhältnis der Anzahl der Atome des Metalls oder der Metalle der Gruppen I bis III des Periodensystems der Elemente zur Anzahl der Atome des Übergangsmetalls, das aus der Übergangsmetall-Komponente hervorgegangen ist, auf den Wert einzustellen, der für die Polymerisation gewählt wurde.

37. Verfahren nach einem der Ansprüche 27 bis 36, dadurch gekennzeichnet, dass wenn der feste aktive Kohlenwasserstoff keinen Elektrodendonor enthält, man letzteren dem Milieu der Polymerisation des Olefins oder der Olefine in Gegenwart des festen aktiven Kohlenwasserstoffs zugibt.

38. Verfahren nach Anspruch 36, dadurch gekennzeichnet, dass wenn der aktive feste Kohlenwasserstoff keinen Elektronendonor enthält, man

letzteren dem Polymerisationsmilieu im Gemisch mit der zusätzlichen Menge des oder der organometallischen Verbindungen zugibt.

39. Verfahren nach einem der Ansprüche 36 bis 38, dadurch gekennzeichnet, dass die zusätzliche Menge der organometallischen Verbindung oder Verbindungen oder/und der Elektronendonor dem festen aktiven Kohlenwasserstoff nach der Herstellung des letzteren aber vor dessen Einsatz zur Polymerisation des Olefins oder der Olefine zugegeben werden.

40. Verfahren nach Anspruch 39, dadurch gekennzeichnet, dass der feste aktive Kohlenwasserstoff, der die zusätzliche Menge der organometallischen Verbindung(en) enthält als einzige katalytische Verbindung für die Polymerisation des Olefins oder der Olefine in der Gasphase verwendet wird.